# FASCICULE DE BREVET EUROPEEN

(11) **EP 3 520 012 B1**
(45) Date de publication et mention de la délivrance du brevet: **29.10.2025**
(21) Numéro de dépôt: 17793690.3
(22) Date de dépôt: 29.09.2017
(51) Int. Cl.: G06F 21/56, H04L 9/40

(54) **PROCÉDÉ D 'INSPECTION DE TRAFIC CHIFFRÉ AVEC DES TRAPDOORS FOURNIES.**
VERFAHREN ZUR INSPEKTION EINES VERSCHLÜSSELTEN STREAMS MIT VORGEGEBENEN TRAPDOORS
METHOD FOR INSPECTION OF ENCRYPTED TRAFFIC WITH PROVIDED TRAPDOORS

(30) Priorité: 30.09.2016 FR 1659428
(43) Date de publication de la demande: 07.08.2019
(73) Titulaire: Orange, 92130 Issy-les-Moulineaux (FR)
(72) Inventeur: CANARD, Sébastien, 92326 Châtillon Cedex (FR); DIOP, Aida, 92326 Châtillon Cedex (FR); KHEIR, Nizar, 92326 Châtillon Cedex (FR); PAINDAVOINE, Marie, 92326 Châtillon Cedex (FR)
(74) Mandataire: Cabinet Beau de Loménie
(86) Numéro de dépôt international: PCT/FR2017/052689
(87) Numéro de publication internationale: WO 2018/060657

(56) Documents cités:
- JUSTINE SHERRY ET AL: "BlindBox: Deep Packet Inspection over Encrypted Traffic", INTERNATIONAL ASSOCIATION FOR CRYPTOLOGIC RESEARCH,, vol. 20160411:194057, 11 April 2016 (2016-04-11), pages 1 - 22, XP061020597
- THOMAS FUHR ET AL: "Decryptable Searchable Encryption", 1 November 2007, PROVABLE SECURITY; [LECTURE NOTES IN COMPUTER SCIENCE], SPRINGER BERLIN HEIDELBERG, BERLIN, HEIDELBERG, PAGE(S) 228 - 236, ISBN: 978-3-540-75669-9, XP019081543
- "LECTURE NOTES IN COMPUTER SCIENCE", vol. 6715, 1 January 2011, SPRINGER BERLIN HEIDELBERG, Berlin, Heidelberg, ISBN: 978-3-54-045234-8, ISSN: 0302-9743, article LUAN IBRAIMI ET AL: "Public-Key Encryption with Delegated Search", pages: 532 - 549, XP055047620, DOI: 10.1007/978-3-642-21554-4_31
- JUSTINE SHERRY ET AL: "BlindBox: Deep Packet Inspection over Encrypted Traffic", INTERNATIONAL ASSOCIATION FOR CRYPTOLOGIC RESEARCH,, vol. 20160411:194057, 11 April 2016 (2016-04-11), pages 1 - 22, XP061020597
- THOMAS FUHR ET AL: "Decryptable Searchable Encryption", 1 November 2007, PROVABLE SECURITY; [LECTURE NOTES IN COMPUTER SCIENCE], SPRINGER BERLIN HEIDELBERG, BERLIN, HEIDELBERG, PAGE(S) 228 - 236, ISBN: 978-3-540-75669-9, XP019081543
- "LECTURE NOTES IN COMPUTER SCIENCE", vol. 6715, 1 January 2011, SPRINGER BERLIN HEIDELBERG, Berlin, Heidelberg, ISBN: 978-3-54-045234-8, ISSN: 0302-9743, article LUAN IBRAIMI ET AL: "Public-Key Encryption with Delegated Search", pages: 532 - 549, XP055047620, DOI: 10.1007/978-3-642-21554-4_31

## Description

### Arrière-plan de l'invention

L'invention se rapporte au domaine général des télécommunications.

Elle concerne plus particulièrement la détection d'intrusions sur un réseau de télécommunications via lequel un dispositif émetteur et un dispositif récepteur s'échangent du trafic chiffré.

De façon connue, les protocoles SSL (Secure Sockets Layer), et plus récemment TLS (Transport Layer Security), sont des protocoles de sécurisation couramment utilisés sur les réseaux comme par exemple sur le réseau public Internet par le protocole HTTPS (HyperText Transfer Protocol Secure) pour assurer la confidentialité des échanges. Ces protocoles permettent de protéger toute donnée sensible partagée par divers dispositifs sur le réseau, en chiffrant les échanges entre ces dispositifs. Malheureusement ce chiffrement rend impuissantes les techniques existantes de détection d'intrusions, qui sont incapables d'inspecter le trafic chiffré échangé sur le réseau.

En effet, les systèmes de détection et de protection contre les intrusions (aussi couramment désignés par IDS (Intrusion Detection Systems) et IPS (Intrusion Protection Systems)) sont classiquement configurés pour surveiller le trafic échangé sur le réseau et identifier des signatures ou des comportements caractéristiques dans ce trafic associés à diverses menaces susceptibles d'affecter le réseau, telles que par exemple l'intrusion de logiciels malveillants ou malwares, la fuite de données sensibles, des attaques perpétrées contre le réseau, etc. A cet effet, ces systèmes mettent en œuvre une inspection des paquets en profondeur plus communément désignée par DPI (pour Deep Packet Inspection en anglais), qui consiste à analyser le contenu d'un paquet réseau (ex. paquet IP) et non pas uniquement son entête, et à comparer ce contenu avec des signatures ou encore mots-clés (« patterns » en anglais), caractéristiques de scénarii d'attaques connus. Ces signatures ou mots-clés sont déterminé(e)s et fourni(e)s par des éditeurs de sécurité ou autres logiciels à code source ouvert (i.e. « open source »), qui rivalisent entre eux pour proposer un catalogue de signatures à jour couvrant le plus large éventail d'attaques possible sachant que de nouvelles attaques apparaissent chaque jour.

Le point commun de ces systèmes IDS est qu'ils se basent sur l'analyse de communications transmises en clair sur le réseau afin de pouvoir comparer le contenu de ces communications aux signatures préétablies par les éditeurs de sécurité. L'utilisation sur le réseau de procédures de sécurisation telles que SSL ou TLS rend donc impossible l'utilisation en l'état de ces systèmes, de sorte que les systèmes d'information qui s'appuient sur des échanges chiffrés sur le réseau sont vulnérables à de nombreuses cyber-attaques.

Pour contourner cette limitation, de nombreux éditeurs de sécurité proposent des applications qui se comportent de façon non sécurisée en se positionnant en tant qu'« homme du milieu » (ou man-in-the-middle en anglais) sur une connexion SSL/TLS reliant un dispositif émetteur à un dispositif récepteur, de sorte à intercepter les communications entre ces deux dispositifs. Cette interception est mise en œuvre via l'utilisation de faux certificats de confiance qui permettent de casser de bout en bout le chiffrement utilisé entre les deux dispositifs et d'accéder au contenu de leurs échanges en clair.

Si une telle solution est satisfaisante du point de vue de la détection des intrusions, elle n'en pose pas moins des problèmes éthiques, juridiques et en termes de confidentialité et de protection de la vie privée des utilisateurs, de sorte que plusieurs navigateurs web aujourd'hui embarquent des plug-ins qui permettent de détecter et de révoquer les faux certificats de confiance utilisés par les systèmes IDS.

Il a ainsi été longtemps considéré qu'il n'était pas possible de satisfaire simultanément aux deux conditions de sécurité du réseau en termes de surveillance et de détection d'intrusions, et de garantie de la vie privée des utilisateurs via le chiffrement de leurs communications.

J. Sherry et al., dans le document intitulé « BlindBox : Deep Packet Inspection over Encrypted Traffic », SIGCOMM'15, 17-21 août 2015, proposent une technique d'inspection de trafic chiffré utilisant des protocoles de chiffrement avancé. Cette technique permet de détecter des attaques perpétrées sur du trafic chiffré via un proxy IDS se trouvant en coupure du trafic (aussi désigné par « middlebox » en anglais). Elle s'appuie sur la fourniture en clair, par l'éditeur de sécurité, des mots-clés à rechercher dans le trafic et le chiffrement par le proxy IDS de ces mots-clés en préliminaire de chaque connexion chiffrée (ex. à chaque connexion SSL) mise en œuvre entre un dispositif émetteur et un dispositif récepteur. Le proxy IDS compare alors les mots-clés ainsi chiffrés avec le trafic échangé entre le dispositif émetteur et le dispositif récepteur. Si une concordance est détectée, le trafic est considéré comme suspect, et différentes actions peuvent dès lors être entreprises, comme par exemple l'envoi d'une notification à l'administrateur du réseau, la suppression du paquet considéré comme suspect, l'arrêt de la connexion entre le dispositif émetteur et le dispositif récepteur, etc.

Toutefois, la solution proposée par Sherry et al. souffre d'un inconvénient majeur, à savoir qu'il est incompatible avec les règles imposées aujourd'hui par l'écosystème auquel participent les éditeurs de sécurité et les systèmes IDS. En effet, comme mentionné précédemment, la solution proposée par Sherry et al. requiert que l'ensemble des mots-clés et des règles de détection (ex. combinaison de plusieurs mots-clés) proposés par l'éditeur de sécurité soit accessible en clair par le proxy IDS afin qu'il puisse les chiffrer, et donc plus généralement, par chaque proxy IDS présent dans le réseau. Si cette contrainte n'en est pas une du point de vue théorique, elle n'est pas du tout en phase avec les pratiques en la matière des éditeurs de sécurité, pour des raisons économiques évidentes, les bases de mots-clés et autres règles de détection constituant la valeur ajoutée des éditeurs de sécurité. Par conséquent, bien que théoriquement envisageable, la solution proposée par Sherry et al. n'est pas applicable en pratique dans un réseau.

En outre, dans un souci d'efficacité, il arrive très souvent qu'un même système IDS soit configuré pour utiliser des mots-clés ou des signatures provenant de différents éditeurs de sécurité. En l'absence probable d'harmonisation entre les éditeurs de sécurité, le proxy IDS proposé par J. Sherry et al. devrait donc être en mesure d'intégrer des signatures en clair ayant potentiellement différents formats ou différentes sémantiques. Ceci induit une grande complexité d'implémentation difficilement envisageable en pratique pour un tel équipement.

### Objet et résumé de l'invention

L'invention permet de remédier à ces inconvénients en proposant un procédé de détection d'intrusions sur un réseau via lequel communiquent un dispositif émetteur et un dispositif récepteur, ce procédé de détection utilisant un algorithme de chiffrement cherchable défini par un algorithme de génération de clés, une procédure de chiffrement/déchiffrement, un algorithme de génération de trappes, et une procédure de test apte à utiliser lesdites trappes, ledit procédé de détection comprenant :
- une étape de génération, au moyen dudit algorithme de génération de clés, d'une clé de dérivation de trappes destinée à un dispositif de sécurité apte à déterminer une pluralité de mots-clés caractéristiques d'intrusions susceptibles d'affecter le réseau ;
- une étape de génération, par le dispositif de sécurité, d'une trappe pour chaque mot-clé de ladite pluralité de mots-clés en utilisant ledit algorithme de génération de trappes paramétré par la clé de dérivation de trappes, chaque trappe générée pour un mot-clé permettant de détecter une chaîne de caractères représentative d'un chiffré de ce mot-clé obtenu au moyen de ladite procédure de chiffrement/déchiffrement ;
- une étape de fourniture, par le dispositif de sécurité, des trappes générées pour ladite pluralité de mots-clés à un dispositif de détection d'intrusions localisé dans le réseau entre le dispositif émetteur et le dispositif récepteur ;
- une étape d'interception, par le dispositif de détection d'intrusions, d'une pluralité de chaînes de caractères chiffrées émises sur le réseau par le dispositif émetteur à destination du dispositif récepteur, ladite pluralité de chaînes de caractères chiffrées résultant du chiffrement d'une pluralité de chaînes de caractères issues d'un découpage par le dispositif émetteur d'un message destiné au dispositif récepteur, ledit chiffrement étant réalisé au moyen de ladite procédure de chiffrement/déchiffrement et d'une clé publique de chiffrement associée au dispositif récepteur ;
- une étape d'application, par le dispositif de détection d'intrusions, de la procédure de test sur la pluralité de chaînes de caractères chiffrées interceptées, ladite procédure de test utilisant les trappes fournies par le dispositif de sécurité pour détecter s'il existe au moins une chaîne de caractères chiffrée parmi ladite pluralité de chaînes de caractères chiffrées interceptées représentative d'au moins un chiffré d'un mot-clé parmi ladite pluralité de mots-clés ; et
- une étape de détection d'une intrusion sur le réseau si le dispositif de détection d'intrusions détecte l'existence d'une telle chaîne de caractères chiffrée interceptée.

L'invention vise également un procédé de surveillance d'un réseau par un dispositif de détection d'intrusions au moyen d'un algorithme de chiffrement cherchable défini par un algorithme de génération de clés, une procédure de chiffrement/déchiffrement, un algorithme de génération de trappes, et une procédure de test apte à utiliser lesdites trappes, ledit dispositif de détection d'intrusions étant localisé sur le réseau entre un dispositif émetteur et un dispositif récepteur, ledit procédé de surveillance comprenant :
- une étape d'obtention, en provenance d'un dispositif de sécurité disposant d'une pluralité de mots-clés caractéristiques d'intrusions susceptibles d'être commises sur le réseau, d'une pluralité de trappes générées par le dispositif de sécurité pour ladite pluralité de mots-clés en utilisant ledit algorithme de génération de trappes paramétré par une clé de dérivation de trappes générée pour le dispositif de sécurité au moyen dudit algorithme de génération de clés, lesdits mots-clés étant gardés secrets par le dispositif de sécurité vis-à-vis du dispositif de détection d'intrusions ;
- une étape d'interception d'une pluralité de chaînes de caractères chiffrées émises sur le réseau par le dispositif émetteur à destination du dispositif récepteur, ladite pluralité de chaînes de caractères chiffrées résultant du chiffrement d'une pluralité de chaînes de caractères issues d'un découpage par le dispositif émetteur d'un message destiné au dispositif récepteur, ledit chiffrement étant réalisé au moyen de ladite procédure de chiffrement/déchiffrement et d'une clé publique de chiffrement associée au dispositif récepteur ;
- une étape d'application de la procédure de test sur la pluralité de chaînes de caractères chiffrées interceptées, ladite procédure de test utilisant les trappes fournies par le dispositif de sécurité pour détecter s'il existe au moins une chaîne de caractères chiffrée parmi ladite pluralité de chaînes de caractères chiffrées interceptées représentative d'au moins un chiffré d' un mot-clé parmi ladite pluralité de mots-clés ; et
- une étape de détection d'une intrusion sur le réseau si le dispositif de détection d'intrusions détecte l'existence d'une telle chaîne de caractères chiffrée interceptée.

Corrélativement, l'invention concerne aussi un dispositif de détection d'intrusions sur un réseau configuré pour utiliser un algorithme de chiffrement cherchable défini par un algorithme de génération de clés, une procédure de chiffrement/déchiffrement, un algorithme de génération de trappes, et une procédure de test apte à utiliser lesdites trappes, ledit dispositif de détection d'intrusions étant destiné à être localisé sur le réseau entre un dispositif émetteur et un dispositif récepteur et comprenant :
- un module d'obtention, apte à obtenir en provenance d'un dispositif de sécurité disposant d'une pluralité de mots-clés caractéristiques d'intrusions susceptibles d'être commises sur le réseau, d'une pluralité de trappes générées par le dispositif de sécurité pour ladite pluralité de mots-clés en utilisant ledit algorithme de génération de trappes paramétré par une clé de dérivation de trappes générée pour le dispositif de sécurité au moyen dudit algorithme de génération de clés, lesdits mots-clés n'étant pas connus du dispositif de détection d'intrusions ;
- un module d'interception, configuré pour intercepter une pluralité de chaînes de caractères chiffrées émises sur le réseau par le dispositif émetteur à destination du dispositif récepteur, ladite pluralité de chaînes de caractères chiffrées résultant du chiffrement d'une pluralité de chaînes de caractères issues d'un découpage par le dispositif émetteur d'un message destiné au dispositif récepteur, ledit chiffrement étant réalisé au moyen de ladite procédure de chiffrement/déchiffrement et d'une clé publique de chiffrement associée au dispositif récepteur;
- un module de test, configuré pour appliquer ladite procédure de test sur la pluralité de chaînes de caractères chiffrées interceptées, cette procédure de test utilisant les trappes obtenues du dispositif de sécurité pour détecter s'il existe au moins une chaîne de caractères chiffrée parmi ladite pluralité de chaînes de caractères chiffrées interceptées représentative d'au moins un chiffré d'un mot clé parmi ladite pluralité de mots clés ; et
- un module de détection de l'existence d'une intrusion affectant le réseau, activé si le module de test détecte l'existence d'une telle chaîne de caractères chiffrée interceptée.

L'invention vise également un système de détection d'intrusions sur un réseau via lequel sont aptes à communiquer un dispositif émetteur et un dispositif récepteur, ce système de détection étant configuré pour utiliser un algorithme de chiffrement cherchable défini par un algorithme de génération de clés, une procédure de chiffrement/déchiffrement, un algorithme de génération de trappes, et une procédure de test apte à utiliser lesdites trappes, le système de détection comprenant :
- un dispositif de sécurité, apte à déterminer une pluralité de mots-clés caractéristiques d'intrusions susceptibles d'affecter le réseau ;
- un dispositif de détection d'intrusions selon l'invention localisé dans le réseau entre le dispositif émetteur et le dispositif récepteur ; et
- au moins un module de génération de clés configuré pour générer au moyen de l'algorithme de génération de clés une clé de dérivation de trappes destinée au dispositif de sécurité ;
et dans lequel le dispositif de sécurité comprend :
- un module de génération de trappes configuré pour générer une trappe pour chaque mot-clé de ladite pluralité de mots-clés en utilisant ledit algorithme de génération de trappes paramétré par la clé de dérivation de trappes, chaque trappe générée pour un mot-clé permettant de détecter une chaîne de caractères représentative d'un chiffré de ce mot-clé obtenu au moyen de la procédure de chiffrement/déchiffrement ; et
- un module de fourniture, configuré pour fournir les trappes générées pour les mots-clés au dispositif de détection d'intrusions tout en gardant secrets lesdits mots-clés à l'égard du dispositif de détection d'intrusions.

On note qu'aucune limitation n'est attachée sur la façon dont une intrusion détectée par le dispositif de détection d'intrusions est traitée. La détection d'une telle intrusion peut ainsi par exemple faire uniquement l'objet d'une notification envoyée par le dispositif de détection d'intrusions à l'administrateur du réseau, ou déclencher une action corrective, comme par exemple le rejet du message examiné, l'interruption de la connexion entre le dispositif émetteur et le dispositif récepteur, etc.

L'invention propose ainsi une nouvelle approche permettant le chiffrement d'une communication entre un dispositif émetteur et un dispositif récepteur tout en gardant possible la détection d'intrusions sur le réseau de type DPI (i.e. Deep Packet Inspection ou inspection des paquets en profondeur) par un dispositif intermédiaire ou encore une « middlebox » et qui est situé entre le dispositif émetteur et le dispositif récepteur (dispositif de détection d'intrusions au sens de l'invention). Autrement dit, l'invention offre la possibilité d'assurer la sécurité du réseau tout en garantissant aux utilisateurs de ce réseau le respect de la confidentialité de leurs échanges.

Cette approche s'appuie sur l'utilisation d'un algorithme de chiffrement cherchable qui permet d'effectuer des tests d'égalité entre des mots-clés définis par un éditeur de sécurité (dispositif de sécurité au sens de l'invention) et du trafic potentiellement malveillant échangé de manière chiffrée sur le réseau entre le dispositif émetteur et le dispositif récepteur. Un tel algorithme de chiffrement cherchable est classiquement défini par un algorithme de génération de clés cryptographiques, une procédure de chiffrement/déchiffrement ainsi que par un algorithme de génération de trappes et une procédure de test apte à utiliser lesdites trappes.

De façon connue en cryptographie, une trappe associée à un mot ou plus généralement à un message est une information, difficilement inversible si l'on ne connaît pas la clé ayant permis de la dériver (autrement dit une information à partir de laquelle il est quasiment impossible d'accéder au message pour lequel elle a été générée), et qui permet de réaliser une action particulière qui ne serait pas réalisable si l'on ne détenait pas une telle information. En l'espèce ici, les trappes générées pour les différents mots-clés établis par le dispositif de sécurité permettent d'effectuer des tests d'égalité sur des données chiffrées échangées entre le dispositif émetteur et le dispositif récepteur, lesdites données ayant été chiffrées au moyen de la procédure de chiffrement associée à l'algorithme de chiffrement cherchable. Plus particulièrement ici, les trappes générées pour les différents mots-clés établis par l'éditeur de sécurité permettent au dispositif de détection d'intrusions de comparer des données sous forme chiffrée aux mots-clés sans toutefois avoir accès directement à ces mots-clés en clair.

Ainsi, conformément à l'invention, seules des « trappes » générées par le dispositif de sécurité lui-même à partir des mots-clés qu'il a précédemment établis sont fournies par ce dernier au dispositif de détection d'intrusions. La fourniture de ces trappes permet au dispositif de sécurité de s'affranchir de fournir les mots-clés en clair au dispositif de détection d'intrusions. L'utilisation d'un algorithme de chiffrement cherchable telle que proposée par l'invention permet donc avantageusement à l'éditeur de sécurité de garder secrets à l'égard du dispositif de détection d'intrusions les mots-clés qu'il a établis pour la détection d'intrusions. L'approche proposée par l'invention est donc parfaitement compatible avec les modèles économiques existants des éditeurs de sécurité : aucune règle de détection, aucun mot-clé n'est fourni en clair par l'éditeur de sécurité au dispositif de détection d'intrusions.

En outre, en ne fournissant que des trappes au dispositif de détection d'intrusions sans jamais lui fournir en clair les mots-clés associés à ces trappes, l'invention permet d'uniformiser les formats et la sémantique des informations utilisées par le dispositif de détection d'intrusions pour détecter d'éventuelles attaques sur le réseau. Il s'ensuit une implémentation simplifiée au niveau du dispositif de détection d'intrusions.

Il convient de noter que l'invention peut s'appliquer aussi bien dans un contexte où le dispositif émetteur et le dispositif récepteur sont tous les deux honnêtes que dans un contexte où l'un au moins de ces dispositifs est « malhonnête », c'est-à-dire qu'il peut être à l'origine de l'intrusion perpétrée sur le réseau (volontairement ou involontairement) ou collaborer avec l'entité à l'origine de cette intrusion. Cela correspond par exemple à un cas où un dispositif émetteur, dont le contrôle a été pris par un attaquant transmet des données sensibles qui sont reçues et attendues par le dispositif récepteur. Un tel contexte a une importance primordiale dès lors qu'on constate aujourd'hui que la plupart des attaques proviennent des systèmes d'information eux-mêmes, via des logiciels malveillants qui prennent le contrôle des terminaux des systèmes d'information. Par conséquent, le dispositif émetteur comme le dispositif récepteur peuvent être assez facilement corrompus par une entité distante malveillante qui peut en prendre le contrôle de manière totale ou partielle (par exemple, un terminal victime infecté peut faire fuiter des données sensibles vers son logiciel maître via une telle prise de contrôle). On se limitera toutefois ici au cas où, lorsque les deux dispositifs sont « malhonnêtes » indépendamment l'un de l'autre, c'est-à-dire qu'aucune entente préalable n'a été conclue entre eux (par exemple pour transmettre des données sensibles d'une manière spécifique en découpant et en transmettant ces données d'une façon telle que le procédé serait inefficace pour détecter la façon dont la fuite de données a été opérée). Au contraire, l'approche proposée dans le document de J. Sherry et al. ne permet pas de gérer une situation dans laquelle les dispositifs émetteur et récepteur sont tous les deux malhonnêtes indépendamment l'un de l'autre.

Dans un mode particulier de réalisation, la clé de dérivation de trappes est indépendante d'une clé privée de déchiffrement du dispositif récepteur associée à la clé publique de chiffrement du dispositif récepteur. Elle est par exemple générée par le dispositif de sécurité au moyen de l'algorithme de génération de clés associé à l'algorithme de chiffrement cherchable. Elle est bien entendu en tout état de cause gardée secrète vis-à-vis du dispositif de détection d'intrusions.

La gestion des clés cryptographiques proposée dans ce mode de réalisation est particulièrement avantageuse : en effet, avoir une clé de dérivation des trappes indépendante de la clé privée de déchiffrement du dispositif récepteur permet d'utiliser la même clé de dérivation des trappes pour différents dispositifs récepteurs communiquant sur le réseau. Autrement dit, les trappes associées aux mots-clés définis par le dispositif de sécurité peuvent être générées une unique fois par le dispositif de sécurité puis être utilisées par le dispositif de détection d'intrusions pour gérer plusieurs connexions sécurisées (ex. connexion SSL). Il n'est pas nécessaire de générer des trappes pour chaque nouvelle connexion sécurisée que le dispositif de détection d'intrusions est amené à surveiller. L'invention dans ce mode de réalisation permet donc un gain substantiel en termes de complexité par rapport au schéma proposé dans le document de Sherry et al. qui requiert le chiffrement des mots-clés par le proxy à chaque nouvelle connexion entre un dispositif émetteur et un dispositif récepteur.

Il offre en outre la possibilité de tenir compte facilement et rapidement d'une mise à jour des mots-clés par l'éditeur de sécurité, par exemple en raison de l'apparition de nouveaux types d'intrusions susceptibles d'affecter le réseau.

Dans un mode particulier de réalisation, le procédé de détection d'intrusions, respectivement le procédé de surveillance, comprend, après l'étape d'application de la procédure de test, si aucune intrusion n'a été détectée par le dispositif de détection d'intrusions :
- une étape de reconstruction, par le dispositif de détection d'intrusions, d'une version chiffrée du message à partir de la pluralité de chaînes de caractère chiffrées interceptées ; et
- une étape de transmission, par le dispositif de détection d'intrusions, de cette version chiffrée du message au dispositif récepteur.

Corrélativement, le dispositif de détection d'intrusions comprend en outre un module de reconstruction et un module de transmission, activés par le module de test lorsqu'aucune intrusion n'a été détectée sur le réseau, le module de reconstruction étant configuré pour reconstruire une version chiffrée du message à partir de la pluralité de chaînes de caractères chiffrées interceptées, et le module de transmission étant configuré pour transmettre cette version chiffrée du message au dispositif récepteur.

En transmettant au dispositif récepteur une version chiffrée du message reconstruite par le dispositif de détection d'intrusions, ce mode de réalisation offre la possibilité au dispositif récepteur de déchiffrer cette version chiffrée plutôt qu'un message élaboré directement par le dispositif émetteur et n'ayant subi aucun contrôle du dispositif de détection d'intrusions. Ce mode de réalisation permet ainsi au dispositif récepteur de se protéger contre un dispositif émetteur malhonnête qui ferait par exemple en sorte d'envoyer un message destiné à être déchiffré par le dispositif récepteur et qui contiendrait un virus, tandis que la pluralité de chaînes de caractères soi-disant issues du découpage de ce message et qui est destinée à être analysée par le dispositif de détection d'intrusions serait exempte de virus. En s'assurant que le déchiffrement réalisé par le dispositif récepteur est basé sur la version chiffrée du message reconstruite par le dispositif de détection d'intrusions, on se prémunit contre une telle situation.

Dans un mode particulier de réalisation, lors de l'étape de fourniture du procédé de surveillance, le dispositif de sécurité fournit en outre au dispositif de détection d'intrusions des règles de détection à appliquer lors de l'étape de test.

La fourniture de règles de détection en plus des trappes associées aux mots-clés permet au dispositif de détection d'intrusions de procéder à des tests d'égalité plus complets, portant par exemple sur des combinaisons booléennes de mots-clés au lieu de mots-clés pris isolément. On note que la connaissance de ces règles qui structure à proprement parler la recherche effectuée par le dispositif de détection d'intrusions, se fait indépendamment de la connaissance des mots-clés, et ne requiert pas que le dispositif de sécurité divulgue les mots-clés au dispositif de détection d'intrusions.

Dans un mode particulier de réalisation, la taille des chaînes de caractères résultant du découpage du message est fixée en fonction de la taille des mots-clés déterminés par le dispositif de sécurité. Typiquement, le découpage d'un message en chaînes de caractères de dimension k, k désignant un entier supérieur à 1, permet de tester des mots-clés de dimension k. Le découpage peut être opéré par le dispositif émetteur en utilisant une fenêtre glissante de dimension k qu'il déplace d'un caractère à chaque fois sur le message. Si des mots-clés de tailles différentes sont déterminés par le dispositif de sécurité, un tel découpage du message peut être renouvelé pour chaque taille différente de mots-clés.

Selon un autre aspect, l'invention vise un procédé de communication entre un dispositif émetteur et un dispositif récepteur via un réseau, ce procédé de communication utilisant un algorithme de chiffrement cherchable défini par un algorithme de génération de clés, une procédure de chiffrement/déchiffrement, un algorithme de génération de trappes, et une procédure de test apte à utiliser lesdites trappes, ledit procédé de communication comprenant :
- une étape de découpage, par le dispositif émetteur, d'un message destiné au dispositif récepteur en une pluralité de chaînes de caractères ;
- une étape de chiffrement, par le dispositif émetteur, de la pluralité de chaînes de caractères au moyen de ladite procédure de chiffrement/déchiffrement et d'une clé publique de chiffrement associée au dispositif récepteur ;
- une étape d'émission, par le dispositif émetteur, de ladite pluralité de chaînes de caractères chiffrées à destination du dispositif récepteur, ladite pluralité de chaînes de caractères chiffrées étant interceptées par le dispositif de détection d'intrusion ;
- une étape de détection d'intrusions conformément à un procédé de détection d'intrusions selon l'invention utilisant l'algorithme de chiffrement cherchable ; et
- une étape de déchiffrement, par le dispositif récepteur, au moyen de ladite procédure de chiffrement/déchiffrement d'une version chiffrée du message.

Corrélativement, l'invention vise aussi un système de communication configuré pour utiliser un algorithme de chiffrement cherchable, cet algorithme de chiffrement cherchable étant défini par un algorithme de génération de clés, une procédure de chiffrement/déchiffrement, un algorithme de génération de trappes, et une procédure de test apte à utiliser lesdites trappes. Le système de communication comprend, conformément à l'invention :
- un dispositif émetteur et un dispositif récepteur aptes à communiquer via un réseau, ledit dispositif récepteur disposant d'une paire de clés comprenant une clé publique de chiffrement et une clé privée de déchiffrement ; et
- un système de détection d'intrusions sur ledit réseau conforme à l'invention et configuré pour utiliser ledit algorithme de chiffrement cherchable, ce système de détection comprenant un dispositif de sécurité et un dispositif de détection d'intrusions conforme à l'invention localisé dans le réseau entre le dispositif émetteur et le dispositif récepteur ;
dans lequel :
- le dispositif émetteur comprend :
   ∘ un module de découpage, configuré pour découper un message destiné au dispositif récepteur en une pluralité de chaînes de caractères ;
   ∘ un module de chiffrement, configuré pour chiffrer la pluralité de chaînes de caractères au moyen de ladite procédure de chiffrement/déchiffrement et de la clé publique de chiffrement associée au dispositif récepteur ; et
   ∘ un module d'émission, configuré pour émettre ladite pluralité de chaînes de caractères chiffrées à destination du dispositif récepteur, ladite pluralité de chaînes de caractères chiffrées étant interceptée par le dispositif de détection d'intrusion ; et
- le dispositif récepteur comprend un module de déchiffrement, configuré pour déchiffrer au moyen de ladite procédure de chiffrement/déchiffrement une version chiffrée du message.

Le procédé et le système de communication bénéficient des mêmes avantages que ceux cités précédemment pour les procédés de surveillance et de détection d'intrusions et pour le dispositif et le système de détection d'intrusions selon l'invention.

On peut également envisager, dans d'autres modes de réalisation, que le procédé de détection d'intrusions, le système de détection d'intrusions, le procédé de communication et le système de communication selon l'invention présentent en combinaison tout ou partie des caractéristiques précitées.

Dans un mode particulier de réalisation, les différentes étapes du procédé de détection d'intrusions sont déterminées par des instructions de programmes d'ordinateurs répartis sur le dispositif de sécurité et sur le dispositif de détection d'instructions.

En conséquence, l'invention vise aussi un programme d'ordinateur sur un support d'informations, ce programme étant susceptible d'être mis en œuvre dans un dispositif de sécurité ou plus généralement dans un ordinateur, ce programme comportant des instructions adaptées à la mise en œuvre des étapes de génération d'une clé de dérivation de trappes, de génération de trappes et de fourniture des trappes d'un procédé de détection d'intrusions tel que décrit ci-dessus.

L'invention vise également un programme d'ordinateur sur un support d'informations, ce programme étant susceptible d'être mis en œuvre dans un dispositif de détection d'intrusions ou plus généralement dans un ordinateur, ce programme comportant des instructions adaptées à la mise en œuvre des étapes d'interception, d'application et de détection d'une intrusion d'un procédé de détection d'intrusions tel que décrit ci-dessus ou adaptées à la mise en œuvre des étapes d'un procédé de surveillance tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communications selon l'invention, dans un mode particulier de réalisation ;
- la figure 2 illustre l'architecture matérielle d'un dispositif de détection d'intrusions selon l'invention, appartenant au système de communications de la figure 1 ; et
- la figure 3, illustre sous forme de diagramme, les principales étapes d'un procédé de communication, d'un procédé de détection d'intrusions et d'un procédé de surveillance selon l'invention dans un mode particulier de réalisation dans lequel ils sont mis en œuvre par les entités constituant le système de communication de la figure 1.

### Description détaillée de l'invention

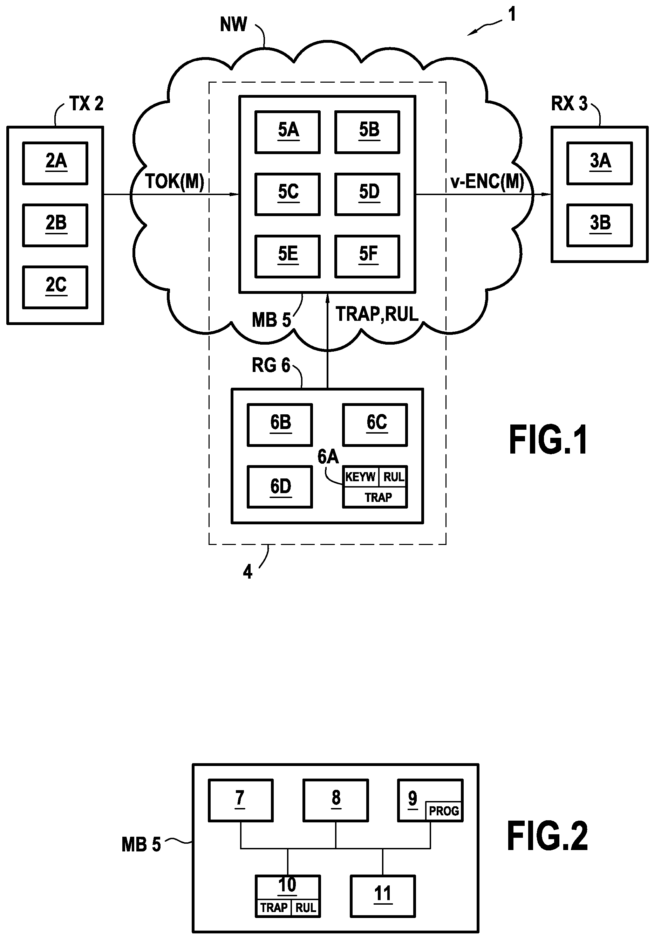

La **figure 1** représente, dans son environnement, un système 1 de communications conforme à l'invention, dans un mode particulier de réalisation.

Le système 1 de communications comprend :
- un dispositif émetteur TX 2 ;
- un dispositif récepteur RX 3 ; et
- un système 4 de détection d'intrusions conforme à l'invention.

Le dispositif émetteur TX 2 et le dispositif récepteur RX 3 sont aptes à communiquer l'un avec l'autre via un réseau de télécommunications NW. Aucune limitation n'est attachée à la nature de ce réseau, hormis le fait que sur ce réseau, les communications entre le dispositif émetteur TX 2 et le dispositif récepteur RX 3 sont sécurisées via l'utilisation d'un algorithme de chiffrement cryptographique détaillé ultérieurement. Le réseau NW peut ainsi être indifféremment un réseau public tel que le réseau Internet ou un réseau privé, un réseau fixe ou mobile, un réseau filaire ou sans fil, il peut être constitué d'un unique réseau ou être composé d'une pluralité de sous-réseaux, etc.

Le système 4 de détection d'intrusions est configuré pour permettre la détection d'intrusions susceptibles d'affecter les communications sur le réseau NW, et plus particulièrement ici dans l'exemple envisagé à la figure 1, les communications entre le dispositif émetteur TX 2 et le dispositif récepteur RX 3. A cet effet, il comprend :
- un dispositif de détection d'intrusions MB 5 (aussi désigné par « middlebox »), conforme à l'invention, et qui se trouve dans le réseau NW en coupure de flux entre chaque dispositif émetteur TX susceptible d'émettre des données sur ce réseau et chaque dispositif récepteur RX susceptible de recevoir des données via ce réseau. En l'espèce ici, dans l'exemple illustré à la figure 1, le dispositif MB 5 de détection d'intrusions se trouve localisé dans le réseau NW entre le dispositif émetteur TX 2 et le dispositif récepteur RX 3. Il est configuré pour intercepter les échanges sur le réseau NW entre ces deux dispositifs ; et
- un dispositif de sécurité RG 6, géré par (i.e. sous le contrôle de) un éditeur de sécurité apte à déterminer (c'est-à-dire à établir) une pluralité de mots-clés KEYW (ou patterns ou encore signatures) caractéristiques d'intrusions susceptibles d'affecter le réseau NW, ainsi que dans le mode de réalisation décrit ici, une ou plusieurs règles de détection RUL propres à ces mots-clés. De telles règles de détection définissent par exemple des combinaisons de plusieurs mots-clés telles que des combinaisons logiques définies au moyen d'opérateurs logiques ou booléens tels que des opérateurs OU, ET, XOR (OU exclusif), etc. Dans le mode de réalisation décrit ici, les mots-clés KEYW et les règles de détection RUL établis par l'éditeur de sécurité sont stockés dans une mémoire non volatile (référencée par 6A sur la figure 2) du dispositif de sécurité RG 6.

La façon dont sont déterminés les mots-clés KEYW et les règles de détection RUL par l'éditeur de sécurité est connue en soi, et dépend du savoir-faire de chaque éditeur de sécurité. Elle n'est pas décrite en détail ici. On note que les mots-clés KEYW et les règles de détection RUL associées à ces mots-clés sont susceptibles d'évoluer ou d'être mis à jour, par exemple suite à l'apparition de nouveaux types d'intrusions susceptibles d'affecter le réseau NW.

En outre, il convient également de noter qu'un même éditeur de sécurité peut être amené à interagir avec plusieurs dispositifs de détection d'intrusions distincts, situés dans le même réseau ou dans des réseaux différents. De façon similaire, un dispositif de détection d'intrusions localisé dans un réseau peut être amené à interagir avec plusieurs éditeurs de sécurité (et donc avec plusieurs dispositifs de sécurité gérés respectivement par ces éditeurs de sécurité). Par souci de simplification toutefois ici, on se limite à un éditeur de sécurité et à un dispositif de détection d'intrusions.

Conformément à l'invention, une inspection en profondeur de type DPI est permise sur le réseau NW bien que les communications entre le dispositif émetteur TX 2 et le dispositif récepteur RX 3 soient chiffrées, et ce, sans que l'éditeur de sécurité ne soit contraint de divulguer au dispositif de détection d'intrusions MB 5 les mots-clés qu'il a établis pour détecter des intrusions affectant le réseau NW. En outre, cette inspection DPI est permise sans que le trafic échangé entre le dispositif émetteur TX et le dispositif récepteur RX ne soit divulgué au dispositif de détection d'intrusions MB 5, même partiellement, de sorte que la confidentialité de l'échange entre les deux dispositifs est préservée et leur vie privée garantie. A cet effet, l'invention s'appuie sur un algorithme de chiffrement cherchable noté ALG-DSE (pour Decryptable Searchable Encryption en anglais), et plus particulièrement, dans le mode de réalisation décrit ici, sur l'algorithme de chiffrement cherchable décrit dans l'article de T. Fuhr et P. Paillier intitulé « Decryptable Searchable Encryption », ProvSec 2007, volume 4784 de Lecture Notes on Computer Science, pages 228-236, Springer, 2007.

De façon connue, un tel algorithme est défini par plusieurs procédures détaillées ultérieurement, à savoir :
- un algorithme de génération de clés noté KEYGEN, paramétré par un paramètre de sécurité λ connu en soi, pris par exemple ici égal à 128 bits, conformément aux recommandations de sécurité en vigueur ;
- une procédure de chiffrement/déchiffrement comprenant un algorithme de chiffrement ENC et un algorithme de déchiffrement DEC ;
- un algorithme de génération de trappes TRAP (ou « trapdoors » en anglais), noté TRAPGEN ; et
- une procédure de test notée TEST apte à utiliser les trappes générées via l'algorithme TRAPGEN.

Une trappe TRAP est un élément ou une information qui permet de réaliser une action particulière uniquement lorsque l'on détient cette trappe. En l'espèce ici, les trappes TRAP générées via l'algorithme de génération de trappes TRAPGEN permettent au dispositif de détection d'intrusions MB 5 d'effectuer des tests d'égalité définis par la procédure de test TEST sur les paquets de données échangés (plus généralement désignés par messages dans la description) entre le dispositif émetteur TX 2 et le dispositif récepteur RX 3 dès lors que ces paquets de données (messages) sont chiffrés au moyen de la procédure de chiffrement ENC associée à l'algorithme de chiffrement cherchable ALG-DSE. De cette sorte, l'invention permet de ne divulguer au dispositif de détection d'intrusion MB 5 que les trappes TRAP et de garder secrets vis-à-vis du dispositif de détection d'intrusion MB 5 les mots-clés KEYW établis par l'éditeur de sécurité et stockés en mémoire du dispositif de sécurité RG 6, par exemple dans la mémoire non volatile 6A.

Dans le mode de réalisation décrit ici, le dispositif de détection d'intrusions MB 5 a l'architecture d'un ordinateur, telle qu'illustrée à la **figure 2****.** Il comprend notamment un processeur 7, une mémoire vive 8, une mémoire morte 9, une mémoire flash non volatile 10 ainsi que des moyens de communication 11 lui permettant d'une part, d'intercepter toute communication entre les dispositifs émetteur TX 2 et récepteur RX 3 sur le réseau NW, et d'autre part de communiquer avec le dispositif de sécurité RG 6. De tels moyens sont connus en soi et ne sont pas décrits plus en détail ici.

La mémoire morte 9 du dispositif de détection d'intrusions MB 5 constitue un support d'enregistrement conforme à l'invention, lisible par le processeur 7 et sur lequel est enregistré ici un programme d'ordinateur PROG conforme à l'invention.

Le programme d'ordinateur PROG définit des modules fonctionnels et logiciels ici, configurés pour mettre en œuvre les étapes d'un procédé de surveillance du réseau NW et certaines étapes d'un procédé de détection d'intrusions selon l'invention. Ces modules fonctionnels s'appuient sur et/ou commandent les éléments matériels 7-11 du dispositif de détection d'intrusions MB 5 cités précédemment. Ils comprennent notamment ici, comme illustré sur la figure 1 :
- un module d'obtention 5A, apte à obtenir en provenance du dispositif de sécurité RG 6 les trappes TRAP générées par celui-ci pour la pluralité de mots-clés KEYW, ainsi que, dans le mode de réalisation décrit ici, les règles de détection RUL ;
- un module d'interception 5B, configuré pour intercepter une pluralité de chaînes de caractères chiffrées, aussi communément appelées « tokens chiffrés » et notées TOK ici, émises sur le réseau NW par le dispositif émetteur TX 2 à destination du dispositif récepteur RX 3. Comme détaillé ultérieurement, les chaînes de caractères qui sont chiffrées proviennent du découpage (ou parsage) d'un message M élaboré par le dispositif émetteur TX 2 et destiné au dispositif récepteur RX 3 ;
- un module de test 5C, configuré pour appliquer la procédure de test TEST associée à l'algorithme de chiffrement cherchable ALG-DSE sur la pluralité de chaînes de caractères chiffrées TOK interceptées par le module d'interception 5B. La procédure de test TEST utilise les trappes obtenues par le module d'obtention 5A pour détecter s'il existe au moins une chaîne de caractères chiffrée parmi les chaînes de caractères chiffrées TOK interceptées par le module d'interception 5B représentative d'un chiffré d'au moins un mot-clé parmi les mots-clés KEYW ; et
- un module de détection 5D de l'existence d'une intrusion affectant le réseau, activé si le module de test 5C détecte l'existence d'une telle chaîne de caractères chiffrée interceptée.

Dans le mode de réalisation décrit ici, le programme d'ordinateur définit en outre deux autres modules fonctionnels, activés par le module de test lorsqu'aucune intrusion n'a été détectée sur le réseau, à savoir :
- un module de reconstruction 5E configuré pour reconstruire une version chiffrée vENC(M) du message M élaboré par le dispositif émetteur TX 2 à partir de la pluralité de chaînes de caractères chiffrées TOK interceptées par le module d'interception 5B ; et
- un module de transmission 5F, configuré pour commander les moyens de communication 11 du dispositif de détection d'intrusions pour transmettre cette version chiffrée vENC(M) du message M au dispositif récepteur RX 3.

Les fonctions de ces différents modules 5A-5F sont décrites plus en détail ultérieurement.

Le dispositif de sécurité RG 6 a également ici l'architecture matérielle d'un ordinateur, cette architecture étant identique à celle du dispositif de détection d'intrusions MB 5, à savoir qu'il comprend un processeur, une mémoire vive, une mémoire morte, la mémoire flash non volatile 6A, ainsi que des moyens de communication lui permettant de communiquer avec le dispositif de détection d'intrusions MB 5. La mémoire morte du dispositif de sécurité constitue un support d'enregistrement, lisible par le processeur du dispositif de sécurité et sur lequel est enregistré ici un programme d'ordinateur définissant des modules fonctionnels, configurés pour mettre en œuvre certaines étapes du procédé de détection d'intrusions selon l'invention. Ces modules fonctionnels s'appuient sur et/ou commandent les éléments matériels du dispositif de sécurité RG 6 cités précédemment. Ils comprennent notamment ici, comme illustré sur la figure 1 :
- un module 6B de génération de clés configuré pour générer au moyen de l'algorithme de génération de clés KEYGEN de l'algorithme de chiffrement cherchable ALG-DSE une clé de dérivation de trappes notée tk(RG) pour le dispositif de sécurité RG 6 ;
- un module 6C de génération de trappes configuré pour générer une trappe pour chaque mot-clé de la pluralité de mots-clés KEYW en utilisant l'algorithme de génération de trappes TRAPGEN de l'algorithme de chiffrement cherchable ALG-DSE, paramétré par la clé de dérivation de trappes tk(RG), chaque trappe générée pour un mot-clé permettant de détecter une chaîne de caractères représentative d'un chiffré de ce mot-clé obtenu au moyen de la procédure de chiffrement ENC de l'algorithme de chiffrement cherchable ALG-DSE ; et
- un module 6D de fourniture commandant les moyens de communications du dispositif de sécurité RG 6, et configuré pour fournir les trappes TRAP générées pour les mots-clés KEYW au dispositif de détection d'intrusions MB 5 tout en gardant secrets les mots-clés KEYW à l'égard du dispositif de détection d'intrusions MB 5.

Les fonctions de ces différents modules 6B-6D sont décrites plus en détail ultérieurement.

On note qu'aucune limitation n'est attachée à la nature des dispositifs émetteur TX 2 et récepteur RX 3. Il peut s'agir d'ordinateurs, de serveurs, de terminaux quelconques, dès lors que ceux-ci sont aptes à communiquer sur le réseau NW de façon sécurisée en utilisant ici la procédure de chiffrement ENC /déchiffrement DEC associée à l'algorithme de chiffrement cherchable ALG-DSE. Dans le mode de réalisation décrit ici, cette procédure de chiffrement/déchiffrement est une procédure de chiffrement/déchiffrement asymétrique s'appuyant sur une paire de clés générée pour le dispositif récepteur RX 3 et comprenant une clé publique de chiffrement pk(RX) et une clé privée de déchiffrement sk(RX) gardée secrète par le dispositif récepteur RX 3.

Dans le mode de réalisation décrit ici, les dispositifs émetteur TX 2 et récepteur RX 3 ont l'architecture matérielle d'un ordinateur, cette architecture étant identique à celle du dispositif de détection d'intrusions MB 5, à savoir qu'ils comprennent un processeur, une mémoire vive, une mémoire morte, la mémoire flash non volatile, ainsi que des moyens de communication leur permettant de communiquer sur le réseau NW.

La mémoire morte du dispositif émetteur TX 2 constitue un support d'enregistrement, lisible par le processeur du dispositif émetteur TX 2 et sur lequel est enregistré ici un programme d'ordinateur définissant des modules fonctionnels s'appuyant sur et/ou commandant les éléments matériels du dispositif émetteur TX 2 cités précédemment. Ces modules fonctionnels comprennent notamment ici, comme illustré sur la figure 1 :
- un module 2A de découpage, configuré pour découper un message M élaboré par le dispositif émetteur TX 2 et destiné au dispositif récepteur RX 3 en une pluralité de chaînes de caractères ou « tokens » ;
- un module 2B de chiffrement, configuré pour chiffrer la pluralité de chaînes de caractères au moyen de ladite procédure de chiffrement ENC de l'algorithme de chiffrement cherchable ALG-DSE et de la clé publique de chiffrement pk(RX) du dispositif récepteur ; et
- un module 2C d'émission, configuré pour émettre ladite pluralité de chaînes de caractères chiffrées TOK à destination du dispositif récepteur RX 3 via le réseau NW.

Par ailleurs, la mémoire morte du dispositif récepteur RX 3 constitue un support d'enregistrement, lisible par le processeur du dispositif récepteur RX 3 et sur lequel est enregistré ici un programme d'ordinateur définissant des modules fonctionnels s'appuyant sur et/ou commandant les éléments matériels du dispositif récepteur RX 3 cités précédemment. Ces modules fonctionnels comprennent notamment ici, comme illustré sur la figure 1 :
- un module 3A de génération de clés, configuré pour exécuter l'algorithme de génération de clés KEYGEN de l'algorithme de chiffrement cherchable ALG-DSE pour générer la paire de clés publique pk(RX) et privée sk(RX) du dispositif récepteur RX 3 ; et
- un module 3B de déchiffrement, configuré pour déchiffrer au moyen de la procédure de déchiffrement DEC de l'algorithme de chiffrement cherchable ALG-DSE une version chiffrée vENC(M) du message M reconstruite et transmise par le dispositif de détection d'intrusions MB 5.

Les fonctions des différents modules 2A-2C et 3A, 3B des dispositifs émetteur TX 2 et récepteur RX 3 sont décrites plus en détail ultérieurement.

On note que dans un autre mode de réalisation, la paire de clés publique/privée allouée au dispositif récepteur RX 3 peut être générée par une autorité de confiance puis transmise par cette autorité au dispositif récepteur RX 3, la clé publique de chiffrement pk(RX) étant par ailleurs rendue publique, en particulier à l'égard du dispositif émetteur TX 2.

Par ailleurs, dans le mode de réalisation décrit ici, on suppose que le dispositif 2 est l'émetteur du message M et le dispositif 3 le destinataire de ce message. Bien entendu, ces rôles sont interchangeables, et le dispositif 2 peut être muni de modules identiques aux modules 3A et 3B du dispositif 3 pour recevoir des messages chiffrés via le réseau NW, de même que le dispositif 3 peut être muni de modules identiques aux modules 2A-2C du dispositif 2 pour émettre des messages chiffrés sur le réseau NW.

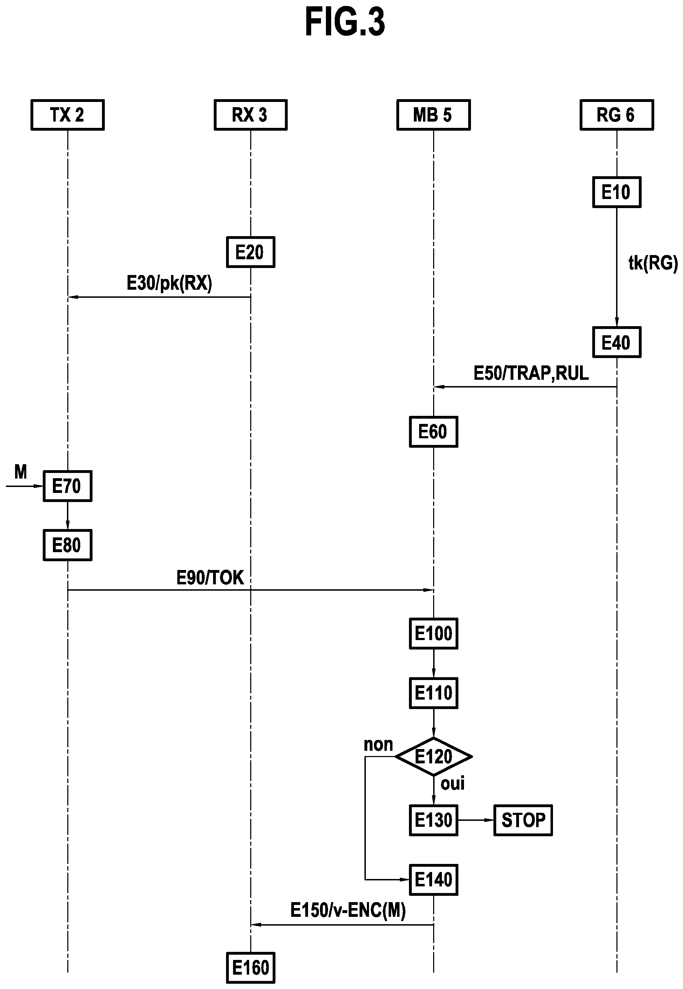

Nous allons maintenant décrire, en référence à la **figure 3****,** les principales étapes d'un procédé de communication selon l'invention tel qu'il est mis en œuvre par le système de communication 1 de la figure 1. Comme il apparaît à la suite de la description, ce procédé de communication intègre les étapes d'un procédé de détection d'intrusions selon l'invention tel qu'il est mis en œuvre par le système de détection d'intrusions 4 de la figure 1, lui-même intégrant les étapes d'un procédé de surveillance du réseau NW tel qu'il est mis en œuvre par le dispositif de détection d'intrusions MB 5 de la figure 1.

On suppose ici que durant une phase d'initialisation, le dispositif de sécurité RG 6 génère sa clé de dérivation de trappes tk(RG), en exécutant, par l'intermédiaire de son module 6A, l'algorithme de génération de clés KEYGEN de l'algorithme de chiffrement cherchable ALG-DSE, paramétré par le paramètre de sécurité λ avec λ=128 bits ici (étape E10). Cette clé de dérivation de trappes tk(RG) est gardée secrète par le dispositif de sécurité RG 6.

Dans une variante de réalisation, la clé de dérivation de trappes tk(RG) est dérivée par une autorité de confiance équipée d'un module de génération de clés utilisant l'algorithme de génération de clés KEYGEN de l'algorithme de chiffrement cherchable ALG-DSE, paramétré par le paramètre de sécurité λ. Dans cette variante de réalisation, l'autorité de confiance transmet ensuite au dispositif de sécurité RG 6 la clé de dérivation de trappes tk(RG) de façon sécurisée.

Par ailleurs, durant la phase d'initialisation, chaque dispositif récepteur, et plus particulièrement ici le dispositif récepteur RX 3, exécute également, par le biais de son module 3A, l'algorithme de génération de clés KEYGEN de l'algorithme de chiffrement cherchable ALG-DSE, paramétré par le paramètre de sécurité λ=128 bits, pour générer sa paire de clés publique pk(RX) et privée sk(RX) (étape E20). La clé publique pk(RX) du dispositif récepteur RX 3 est partagée avec le dispositif émetteur TX 2 (étape E30).

On note que, dans le mode de réalisation décrit ici, comme mentionné précédemment, l'algorithme de chiffrement cherchable utilisé par le système de communication 1 est l'algorithme décrit dans l'article de Fuhr et Paillier. Cet algorithme est remarquable en ce que l'algorithme de génération de clés KEYGEN associé à cet algorithme permet de générer une clé de dérivation de trappes tk(RG) pour le dispositif de sécurité RG 6 qui est indépendante de la clé privée sk(RX) générée pour le dispositif récepteur RX 3.

Dans une variante de réalisation, le dispositif de sécurité RG 6 utilise un premier algorithme de génération de clés pour générer la clé de dérivation de trappes tk(RG), tandis que le dispositif récepteur RX 3 utilise un second algorithme de génération de clés pour générer de façon indépendante de la clé de dérivation de trappes tk(RG) la paire de clé publique pk(RG) / clé privée sk(RG), le premier et le second algorithmes étant distincts et indépendants l'un de l'autre.

Suite à la génération de sa clé de dérivation de trappes tk(RG), le dispositif de sécurité RG 6 génère, via son module 6C, une trappe TRAP(k-i) pour chaque mot-clé k-i de ladite pluralité de mots-clés KEYW stockés dans sa mémoire non volatile 6A, i=1,...,N où N désigne un entier supérieur à 1 (étape E40). A cet effet, le module 6C exécute l'algorithme de génération de trappes TRAPGEN paramétré par sa clé de dérivation de trappes tk(RG). De façon connue, comme mentionné dans l'article de Fuhr et Paillier précédemment cité, chaque trappe TRAP(k-i) générée pour un mot-clé k-i permet de détecter une chaîne de caractères représentative d'un chiffré de ce mot-clé obtenu au moyen de la procédure de chiffrement ENC de l'algorithme de chiffrement cherchable ALG-DSE.

Puis, le dispositif de sécurité RG 6, par l'intermédiaire de son module de fourniture 6D et de ses moyens de communication, fournit les trappes TRAP ainsi générées pour les différents mots-clés de la pluralité de mots-clés KEYW au dispositif de détection d'intrusions MB 5 (étape E50). Dans le mode de réalisation décrit ici, le module de fourniture 6D fournit également au dispositif de détection d'intrusions MB 5 les règles de détection RUL en substituant au préalable dans ces règles de détection RUL les mots-clés concernés par les trappes qui leur sont associés. Dans le mode de réalisation décrit ici, les règles de détection RUL permettent de rechercher dans les échanges chiffrés entre le dispositif émetteur TX 2 et le dispositif récepteur RX 3 des combinaisons logiques de mots-clés en plus des mots-clés pris isolément. Elles définissent de façon équivalente, en substituant les mots-clés par les trappes associées, des combinaisons logiques de trappes à rechercher dans le trafic chiffré échangé entre le dispositif émetteur TX 2 et le dispositif récepteur RX 3, et sont transmises sous cette forme par le dispositif de sécurité RG 6 au dispositif de détection d'intrusions MB 5.

On note que la transmission des trappes TRAP et des règles de détection RUL par le dispositif de sécurité RG 6 au dispositif de détection d'intrusions MB 5 se fait sans divulguer les mots-clés KEYW au dispositif de détection d'intrusions MB 5. Autrement dit, à tout moment, la pluralité de mots-clés KEYW établie par le dispositif de sécurité RG 6 est gardée secrète à l'égard du dispositif de détection d'intrusions MB 5, i.e., le dispositif de détection d'intrusions MB 5 n'a jamais la connaissance de ces mots-clés.

En outre, en raison de l'indépendance de la clé de dérivation de trappes tk(RG) et de la clé privée sk(RX), on note que les trappes TRAP générées par le dispositif de sécurité RG 6 et transmises au dispositif de détection d'intrusions MB 5 peuvent être utilisées par ce dernier pour traiter les échanges entre le dispositif émetteur TX 2 et le dispositif récepteur RX 3, mais également entre d'autres paires de dispositifs émetteur/récepteur. Il n'est pas nécessaire de générer à chaque connexion entre un dispositif émetteur et un dispositif récepteur de nouvelles trappes.

Les trappes TRAP et les règles de détection RUL sont stockées par le dispositif de détection d'intrusions MB 5 dans sa mémoire non volatile 10 (étape E60).

On suppose maintenant que le dispositif émetteur TX 2 souhaite émettre un message M à destination du dispositif récepteur RX 3. Le message M peut être constitué d'un ou de plusieurs paquets de données. Dans la suite de la description par souci de simplification, on considère un unique paquet de données.

Conformément à l'invention, le message M est découpé (« tokenisé » ou « parsé ») par le dispositif émetteur TX 2 via son module de découpage 2A en une pluralité de chaînes de caractères appelées tokens (étape E70). Dans le mode de réalisation décrit ici, la taille des tokens résultant du découpage du message M est fixée en fonction de la taille des mots-clés déterminés par le dispositif de sécurité RG 6.

Plus précisément, supposons que le message M est composé de L bits M1,...,ML, et que les mots-clés spécifiés par le dispositif de sécurité RG 6 sont de tailles k=3, 4 ou 5 bits.

Dans le mode de réalisation décrit ici, pour chaque taille k possible de mots-clés, le message M est découpé par le module 2A en appliquant sur le message M une fenêtre glissante de k bits, décalée successivement de 1 bit, de sorte à obtenir les chaînes de caractères wj (tokens) suivantes : w1(k)=[M1,M2,...,Mk], w2(k)=[M2,M3...,Mk+1], w3(k)=[M3,M4,...,Mk+2], etc. jusqu'à balayement complet du message M.

On note que la taille des mots-clés déterminés par le dispositif de sécurité RG 6 peut être configurée préalablement au sein du module de découpage 2A (par exemple sur indication du dispositif de sécurité RG 6), ou des tailles fixées par défaut peuvent être prédéfinies au niveau du dispositif émetteur TX 2.

Dans une autre variante, le dispositif émetteur TX 2 peut appliquer un autre type de découpage, par exemple indépendant de la taille des mots-clés. Ce découpage peut s'appuyer par exemple sur la présence de délimiteurs spécifiques dans le message M (ex. présences de balises, de caractères typographiques particuliers) qui découpent naturellement le message M en plusieurs chaînes de caractères. On note que dans cette variante, il n'y a aucune redondance entre les chaînes de caractères dès lors obtenues par le module 2A contrairement au mode de réalisation présentement décrit.

Dans une autre variante encore, le dispositif émetteur TX 2 découpe le message M en chaînes de caractères de taille fixe, connue du dispositif de sécurité RG 6 et c'est le dispositif de sécurité RG 6 qui découpe les mots-clés KEYW lorsque leur taille est supérieure à la taille fixe utilisée par le dispositif émetteur TX 2. Dans ce cas, la redondance introduite est limitée.

Puis les chaînes de caractères ainsi obtenues par le module 2A pour chaque taille k sont chiffrées par le module de chiffrement 2B (étape E80). A cet effet, le module de chiffrement 2B utilise la procédure de chiffrement ENC de l'algorithme de chiffrement cherchable ALG-DSE en utilisant (i.e. paramétrée par) la clé publique de chiffrement pk(RX) du dispositif récepteur RX 3. Il obtient, à l'issue de cette étape, une pluralité de chaînes de caractères chiffrées ou tokens chiffrés TOK.

Le dispositif émetteur TX 2, via son module d'émission 2C et ses moyens de communication, émet alors la pluralité de chaînes de caractères chiffrées TOK sur le réseau NW à destination du dispositif récepteur RX 3 (étape E90).

La pluralité de chaînes de caractères chiffrées TOK émises sur le réseau NW par le dispositif émetteur TX 2 est interceptée par le dispositif de détection d'intrusions MB 5 (étape E100).

Le dispositif de détection d'intrusions MB 5 applique alors, via son module de test 5C, à la pluralité de chaînes de caractères chiffrées TOK interceptées, la procédure de test TEST de l'algorithme de chiffrement cherchable ALG-DSE (étape E110).

A cet effet, il procède comme décrit dans l'article de Fuhr et Paillier précédemment cité, en utilisant les trappes TRAP et les règles de détection RUL obtenues à l'étape E50 du dispositif de sécurité RG 6 et stockées dans sa mémoire non volatile 10.

Plus précisément, pour chaque taille k de mots-clés distincte, le module de test 5C utilise les chaînes de caractères chiffrées wj(k) correspondant à cette taille k de mots-clés parmi les chaînes TOK interceptées, et détermine, en exécutant la procédure de test TEST sur chaque chaîne de caractères chiffrée wj(k) au moyen de chacune des trappes TRAP(i) correspondant à un mot-clé de dimension k déterminé par le dispositif de sécurité RG 6, si une des chaînes de caractères wj(k) correspond à un mot-clé k-i de dimension k. Dans l'exemple envisagé ici, la procédure de test TEST est configurée pour fournir un « 1 » si une correspondance existe (i.e. la chaîne de caractères chiffrée testée correspond d'après la trappe TRAP(i) à un chiffré d'un mot-clé k-i défini par le dispositif de sécurité RG 6 et associé à la trappe TRAP(i)), et un « 0 » sinon.

La procédure de test TEST utilisée étant identique à celle décrite dans l'article de Fuhr et Paillier cité précédemment, elle n'est pas décrite en détail ici. Elle est appliquée par le module de test 5C à chaque chaîne de caractères chiffrée interceptée et à chaque trappe fournie par le dispositif de sécurité RG 6. Lorsque des règles de détection RUL sont en outre spécifiées, le module de test 5C évalue, à partir des résultats obtenus pour chaque trappe indépendamment, les règles de détection RUL comme des expressions régulières appliquées à l'ensemble des trappes définissant ces règles de détection RUL. Le résultat de l'évaluation d'une règle de détection RUL est égal ici à 1 si l'expression régulière définie sur les trappes est vérifiée compte-tenu des résultats des procédures de test appliquées sur ces trappes, et à 0 sinon.

Si le module de test 5C détecte la présence d'une correspondance entre au moins l'une des chaînes de caractères chiffrées interceptées et au moins une trappe d'un mot-clé fournie par le dispositif de sécurité RG 6 (lorsque des règles de détection RUL sont spécifiées, cela signifie qu'une correspondance est détectée par le module de test 5C entre des chaînes de caractères chiffrées interceptées et une règle de détection définie à partir de trappes de mots-clés, ce qui correspond où l'expression régulière définie par cette règle de détection RUL est égal à 1) (réponse oui à l'étape test E120), alors le module de test 5C notifie le module 5D de détection de cette correspondance (étape E130) : l'existence d'une telle correspondance et sa notification au module 5D constituent une étape de détection d'une intrusion sur le réseau au sens de l'invention.

Le cas échéant, différentes actions peuvent être entreprises par le dispositif de détection d'intrusions MB 5 en fonction de sa configuration. Par exemple, il peut, via son module 5D et ses moyens de communication 11, notifier l'administrateur du réseau NW de cette détection. En variante ou en complément, le dispositif de détection d'intrusions MB 5 peut supprimer le paquet de données suspect, autrement dit les tokens TOK associés à ce paquet, et ne pas les transmettre au dispositif récepteur RX 3, ceux-ci étant corrompus, etc.

Dans le mode de réalisation décrit ici, s'il résulte qu'aucune chaîne de caractères TOK ne correspond à un chiffré d'un mot-clé après application successive de la procédure de test TEST à toutes les chaînes de caractères chiffrées, à toutes les trappes TRAP fournies par le dispositif de sécurité RG 6 et à toutes les règles de détection RUL (réponse « non » à l'étape test E120), alors cela signifie qu'aucune intrusion n'a été détectée par le dispositif de détection d'intrusions MB 5 sur les chaînes de caractères chiffrées TOK interceptées entre le dispositif émetteur TX 2 et le dispositif récepteur RX 3. Dans le mode de réalisation décrit ici, dans un tel cas de figure, le dispositif de détection d'intrusions MB 5, via son module de reconstruction 5E, procède alors à une reconstruction d'une version chiffrée v-ENC(M) du message M à partir de la pluralité de chaînes de caractère chiffrées TOK interceptées (étape E140). Cette reconstruction peut se faire aisément en ne conservant que les chaînes de caractères chiffrées correspondant à des caractères distincts et successifs du message M, et en concaténant ces chaînes de caractères. Par exemple v-ENC(M)=w1(k),wk+1(k),wk+2(k),....

En variante, un autre algorithme de reconstruction peut être utilisé par le module de reconstruction 5E pour déterminer une version chiffrée du message M. Cet algorithme peut tenir compte notamment de la redondance disponible le cas échéant dans la pluralité de chaînes de caractères chiffrées TOK interceptées par le dispositif de détection d'intrusions MB 5 en raison du découpage appliqué par le dispositif émetteur TX 2. On note toutefois que si le découpage mis en œuvre est basé sur des délimiteurs, il n'existe pas de redondance entre les tokens.

Puis le dispositif de détection d'intrusions MB 5 transmet la version chiffrée v-ENC(M) du message M ainsi reconstituée au dispositif récepteur RX 3 via son module de transmission 5F et ses moyens de communication sur le réseau NW (étape E150).

Sur réception de la version chiffrée v-ENC(M) du message M, le dispositif récepteur RX 3, par l'intermédiaire de son module de déchiffrement 3B, déchiffre la version chiffrée v-ENC(M) (étape E160). A cet effet, il utilise la procédure de déchiffrement DEC de l'algorithme de chiffrement cherchable ALG-DSE et sa clé privée de déchiffrement sk(RX), de façon connue en soi.

L'invention permet donc, grâce à l'utilisation de l'algorithme de chiffrement cherchable ALG-DSE, d'appliquer une procédure d'inspection en profondeur sur le trafic chiffré échangé entre le dispositif émetteur TX 2 et le dispositif récepteur RX 3 sans que le dispositif de détection d'intrusions MB 5 n'ait connaissance des mots-clés définis par le dispositif de sécurité RG 6. On note que dans le mode de réalisation décrit ici, on a considéré comme algorithme de chiffrement cherchable ALG-DSE l'algorithme proposé par Fuhr et Paillier dans l'article cité précédemment. Cet algorithme présente la particularité et l'avantage de permettre la génération d'une clé de dérivation de trappes indépendante de la clé de déchiffrement secrète du dispositif récepteur. Toutefois, cette hypothèse n'est pas limitative en soi, et d'autres algorithmes de chiffrement cherchable peuvent être envisagés pour la mise en œuvre de l'invention, dont notamment des algorithmes pour lesquels une telle indépendance n'est pas assurée comme par exemple dans l'article de D. Boneh et G. Di Crescenzo intitulé « Public Key Encryption with keyword search », Advances in Cryptology, EUROCRYPT 2004, volume 3027 de la série Lecture Notes in Computer Science, pages 506-522.

Par ailleurs, dans le mode de réalisation décrit ici, l'invention permet de s'accommoder du cas où le dispositif émetteur TX 2 et le dispositif récepteur RX 3 seraient tous les deux malhonnêtes selon un certain degré. En effet, la version chiffrée du message M que le dispositif récepteur RX 3 déchiffre est la version testée et reconstruite par le dispositif de détection d'intrusions MB 5. Ainsi, un dispositif émetteur TX 2 dont le contrôle aurait été pris par un attaquant et qui, de ce fait, serait devenu malhonnête pourrait transmettre des données sensibles ou des virus sous le contrôle de l'attaquant. Pour autant, une telle transmission serait détectée par le dispositif de détection d'intrusions MB 5. En effet celui-ci teste et reconstruit la version chiffrée du message M. Il est donc apte à détecter lors de ce test l'envoi des donnée sensibles ou des virus.

On note toutefois qu'en variante, on peut envisager un mode de réalisation moins sécurisé dans lequel le dispositif émetteur TX 2, en plus des chaînes de caractères chiffrées TOK, émet à destination du dispositif récepteur RX 3 une version chiffrée du message M, et qu'en cas d'absence de détection d'intrusion par le dispositif MB 5, c'est cette version chiffrée du message M qui est transmise au dispositif récepteur RX 3 et déchiffrée par celui-ci. On comprend bien toutefois que dans ce mode de réalisation, un dispositif émetteur malhonnête TX 2 pourrait émettre des chaînes de caractères chiffrées ne contenant pas de malware, tout en introduisant un malware dans la version chiffrée du message M uniquement. Une telle situation ne pourrait malheureusement pas être détectée par le dispositif de détection d'intrusions MB 5.

## Revendications

1. Procédé de détection d'intrusions sur un réseau (NW) via lequel communiquent un dispositif émetteur (TX 2) et un dispositif récepteur (RX 3), ce procédé de détection utilisant un algorithme de chiffrement cherchable défini par un algorithme de génération de clés, une procédure de chiffrement/déchiffrement, un algorithme de génération de trappes, et une procédure de test apte à utiliser lesdites trappes, ledit procédé de détection comprenant :
- une étape de génération (E10), au moyen dudit algorithme de génération de clés, d'une clé de dérivation de trappes (tk(RG)) destinée à un dispositif de sécurité (RG 6) apte à déterminer une pluralité de mots-clés (KEYW) caractéristiques d'intrusions susceptibles d'affecter le réseau ;
- une étape de génération (E40), par le dispositif de sécurité, d'une trappe (TRAP) pour chaque mot-clé de ladite pluralité de mots-clés en utilisant ledit algorithme de génération de trappes paramétré par la clé de dérivation de trappes, chaque trappe générée pour un mot-clé permettant de détecter une chaîne de caractères représentative d'un chiffré de ce mot-clé obtenu au moyen de ladite procédure de chiffrement/déchiffrement ;
- une étape de fourniture (E50), par le dispositif de sécurité, des trappes (TRAP) générées pour ladite pluralité de mots-clés à un dispositif de détection d'intrusions (MB 5) localisé dans le réseau entre le dispositif émetteur et le dispositif récepteur ;
- une étape d'interception (E100), par le dispositif de détection d'intrusions (MB 5), d'une pluralité de chaînes de caractères chiffrées (TOK) émises sur le réseau par le dispositif émetteur à destination du dispositif récepteur, ladite pluralité de chaînes de caractères chiffrées résultant du chiffrement d'une pluralité de chaînes de caractères issues d'un découpage par le dispositif émetteur d'un message destiné au dispositif récepteur, ledit chiffrement étant réalisé au moyen de ladite procédure de chiffrement/déchiffrement et d'une clé publique (pk(RX)) de chiffrement associée au dispositif récepteur ;
- une étape d'application (E110), par le dispositif de détection d'intrusions, de la procédure de test sur la pluralité de chaînes de caractères chiffrées interceptées, ladite procédure de test utilisant les trappes fournies par le dispositif de sécurité pour détecter s'il existe au moins une chaîne de caractères chiffrée parmi ladite pluralité de chaînes de caractères chiffrées interceptées représentative d'au moins un chiffré d'un mot-clé parmi ladite pluralité de mots-clés ; et
- une étape de détection (E130) d'une intrusion sur le réseau si le dispositif de détection d'intrusions détecte l'existence d'une telle chaîne de caractères chiffrée interceptée.

2. Procédé de détection selon la revendication 1 dans lequel la clé de dérivation de trappes (tk(RG)) est indépendante d'une clé privée de déchiffrement du dispositif récepteur (RX 3) associée à la clé publique (pk(RX)) de chiffrement dudit dispositif récepteur.

3. Procédé de détection selon la revendication 2 dans lequel ladite clé de dérivation de trappes est générée par le dispositif de sécurité.

4. Procédé de détection selon l'une quelconque des revendications 1 à 3 comprenant en outre, après l'étape d'application de la procédure de test, si aucune intrusion n'a été détectée par le dispositif de détection d'intrusions :
- une étape de reconstruction (E140), par le dispositif de détection d'intrusions, d'une version chiffrée du message à partir de la pluralité de chaînes de caractère chiffrées interceptées ; et
- une étape de transmission (E150), par le dispositif de détection d'intrusions, de cette version chiffrée du message au dispositif récepteur.

5. Procédé de détection selon l'une quelconque des revendications 1 à 4 dans lequel, lors de l'étape de fourniture, le dispositif de sécurité fournit en outre au dispositif de détection d'intrusions des règles de détection (RUL) à appliquer lors de l'étape de test.

6. Procédé de détection selon l'une quelconque des revendications 1 à 5 dans lequel les mots-clés déterminés par le dispositif de sécurité sont gardés secrets par le dispositif de sécurité à l'égard du dispositif de détection d'intrusions.

7. Procédé de communication entre un dispositif émetteur (TX 2) et un dispositif récepteur (RX 3) via un réseau (NW), ce procédé de communication utilisant un algorithme de chiffrement cherchable défini par un algorithme de génération de clés, une procédure de chiffrement/déchiffrement, un algorithme de génération de trappes, et une procédure de test apte à utiliser lesdites trappes, ledit procédé de communication comprenant :
- une étape de découpage (E70), par le dispositif émetteur, d'un message (M) destiné au dispositif récepteur en une pluralité de chaînes de caractères ;
- une étape de chiffrement (E80), par le dispositif émetteur, de la pluralité de chaînes de caractères au moyen de ladite procédure de chiffrement/déchiffrement et d'une clé publique de chiffrement associée au dispositif récepteur ;
- une étape d'émission (E90), par le dispositif émetteur, de ladite pluralité de chaînes de caractères chiffrées (TOK) à destination du dispositif récepteur, ladite pluralité de chaînes de caractères chiffrées étant interceptées par le dispositif de détection d'intrusion ;
- une étape de détection d'intrusions conformément à un procédé de détection d'intrusions selon l'une quelconque des revendications 1 à 6 utilisant ledit algorithme de chiffrement cherchable ; et
- une étape de déchiffrement (E160), par le dispositif récepteur, au moyen de ladite procédure de chiffrement/déchiffrement d'une version chiffrée du message.

8. Procédé de communication selon la revendication 7 dans lequel la taille des chaînes de caractères résultant du découpage du message est fixée en fonction de la taille des mots-clés déterminés par le dispositif de sécurité.

9. Procédé de surveillance d'un réseau par un dispositif de détection d'intrusions (MB 5) au moyen d'un algorithme de chiffrement cherchable défini par un algorithme de génération de clés, une procédure de chiffrement/déchiffrement, un algorithme de génération de trappes, et une procédure de test apte à utiliser lesdites trappes, ledit dispositif de détection d'intrusions étant localisé sur le réseau entre un dispositif émetteur et un dispositif récepteur, ledit procédé de surveillance comprenant :
- une étape d'obtention (E50), en provenance d'un dispositif de sécurité disposant d'une pluralité de mots-clés (KEYW) caractéristiques d'intrusions susceptibles d'être commises sur le réseau, d'une pluralité de trappes (TRAP) générées par le dispositif de sécurité pour ladite pluralité de mots-clés en utilisant ledit algorithme de génération de trappes paramétré par une clé de dérivation de trappes générée pour le dispositif de sécurité au moyen dudit algorithme de génération de clés, lesdits mots-clés étant gardés secrets par le dispositif de sécurité vis-à-vis du dispositif de détection d'intrusions ;
- une étape d'interception (E100) d'une pluralité de chaînes de caractères chiffrées (TOK) émises sur le réseau par le dispositif émetteur à destination du dispositif récepteur, ladite pluralité de chaînes de caractères chiffrées résultant du chiffrement d'une pluralité de chaînes de caractères issues d'un découpage par le dispositif émetteur d'un message destiné au dispositif récepteur, ledit chiffrement étant réalisé au moyen de ladite procédure de chiffrement/déchiffrement et d'une clé publique de chiffrement associée au dispositif récepteur;
- une étape d'application (E110) de la procédure de test sur la pluralité de chaînes de caractères chiffrées interceptées, ladite procédure de test utilisant les trappes fournies par le dispositif de sécurité pour détecter s'il existe au moins une chaîne de caractères chiffrée parmi ladite pluralité de chaînes de caractères chiffrées interceptées représentative d'au moins un chiffré d'un mot-clé parmi ladite pluralité de mots-clés ; et
- une étape de détection (E130) d'une intrusion sur le réseau si le dispositif de détection d'intrusions détecte l'existence d'une telle chaîne de caractères chiffrée interceptée.

10. Dispositif de détection d'intrusions (MB 5) sur un réseau (NW) configuré pour utiliser un algorithme de chiffrement cherchable défini par un algorithme de génération de clés, une procédure de chiffrement/déchiffrement, un algorithme de génération de trappes, et une procédure de test apte à utiliser lesdites trappes, ledit dispositif de détection d'intrusions étant destiné à être localisé sur le réseau entre un dispositif émetteur et un dispositif récepteur et comprenant :
- un module d'obtention (5A), apte à obtenir en provenance d'un dispositif de sécurité disposant d'une pluralité de mots-clés caractéristiques d'intrusions susceptibles d'être commises sur le réseau, d'une pluralité de trappes générées par le dispositif de sécurité pour ladite pluralité de mots-clés en utilisant ledit algorithme de génération de trappes paramétré par une clé de dérivation de trappes générée pour le dispositif de sécurité au moyen dudit algorithme de génération de clés, lesdits mots-clés n'étant pas connus du dispositif de détection d'intrusions ;
- un module d'interception (5B), configuré pour intercepter une pluralité de chaînes de caractères chiffrées émises sur le réseau par le dispositif émetteur à destination du dispositif récepteur, ladite pluralité de chaînes de caractères chiffrées résultant du chiffrement d'une pluralité de chaînes de caractères issues d'un découpage par le dispositif émetteur d'un message destiné au dispositif récepteur, ledit chiffrement étant réalisé au moyen de ladite procédure de chiffrement/déchiffrement et d'une clé publique de chiffrement associée au dispositif récepteur ;
- un module de test (5C), configuré pour appliquer ladite procédure de test sur la pluralité de chaînes de caractères chiffrées interceptées, cette procédure de test utilisant les trappes obtenues du dispositif de sécurité pour détecter s'il existe au moins une chaîne de caractères chiffrée parmi ladite pluralité de chaînes de caractères chiffrées interceptées représentative d'au moins un chiffré d'un mot clé parmi ladite pluralité de mots clés ; et
- un module de détection (5D) de l'existence d'une intrusion affectant le réseau, activé si le module de test détecte l'existence d'une telle chaîne de caractères chiffrée interceptée.

11. Dispositif de détection d'intrusions (5) selon la revendication 10 comprenant en outre un module de reconstruction (5E) et un module de transmission (5F), activés par le module de test lorsqu'aucune intrusion n'a été détectée sur le réseau, ledit module de reconstruction étant configuré pour reconstruire une version chiffrée du message à partir de la pluralité de chaînes de caractères chiffrées interceptées, et le module de transmission étant configuré pour transmettre cette version chiffrée du message au dispositif récepteur.

12. Système de détection (4) d'intrusions sur un réseau via lequel sont aptes à communiquer un dispositif émetteur et un dispositif récepteur, ce système de détection étant configuré pour utiliser un algorithme de chiffrement cherchable défini par un algorithme de génération de clés, une procédure de chiffrement/déchiffrement, un algorithme de génération de trappes, et une procédure de test apte à utiliser lesdites trappes, le système de détection comprenant :
- un dispositif de sécurité (RG 6), apte à déterminer une pluralité de mots-clés caractéristiques d'intrusions susceptibles d'affecter le réseau ;
- un dispositif de détection d'intrusions (MB 5) selon la revendication 10 ou 11 localisé dans le réseau entre le dispositif émetteur et le dispositif récepteur ; et
- au moins un module de génération de clés (6B) configuré pour générer au moyen de l'algorithme de génération de clés une clé de dérivation de trappes destinée au dispositif de sécurité ;
et dans lequel le dispositif de sécurité (RG 6) comprend :
- un module de génération de trappes (6C) configuré pour générer une trappe pour chaque mot-clé de ladite pluralité de mots-clés en utilisant ledit algorithme de génération de trappes paramétré par la clé de dérivation de trappes, chaque trappe générée pour un mot-clé permettant de détecter une chaîne de caractères représentative d'un chiffré de ce mot-clé obtenu au moyen de la procédure de chiffrement/déchiffrement ; et
- un module de fourniture (6D), configuré pour fournir les trappes générées pour les mots-clés au dispositif de détection d'intrusions.

13. Système de communication (1) configuré pour utiliser un algorithme de chiffrement cherchable, ledit algorithme de chiffrement cherchable étant défini par un algorithme de génération de clés, une procédure de chiffrement/déchiffrement, un algorithme de génération de trappes, et une procédure de test apte à utiliser lesdites trappes, ledit système de communication comprenant :
- un dispositif émetteur (2) et un dispositif récepteur (3) aptes à communiquer via un réseau (NW), ledit dispositif récepteur disposant d'une paire de clés comprenant une clé publique de chiffrement et une clé privée de déchiffrement ; et
- un système de détection d'intrusions (4) sur ledit réseau conforme à la revendication 12 et configuré pour utiliser ledit algorithme de chiffrement cherchable, ledit système de détection comprenant un dispositif de sécurité (6) et un dispositif de détection d'intrusions (5) selon la revendication 10 ou 11 localisé dans le réseau entre le dispositif émetteur et le dispositif récepteur ;
dans lequel :
- le dispositif émetteur (2) comprend :
∘ un module de découpage (2A), configuré pour découper un message destiné au dispositif récepteur en une pluralité de chaînes de caractères ;
∘ un module de chiffrement (2B), configuré pour chiffrer la pluralité de chaînes de caractères au moyen de ladite procédure de chiffrement/déchiffrement et de la clé publique de chiffrement associée au dispositif récepteur ; et
∘ un module d'émission (2C), configuré pour émettre ladite pluralité de chaînes de caractères chiffrées à destination du dispositif récepteur, ladite pluralité de chaînes de caractères chiffrées étant interceptée par le dispositif de détection d'intrusions ; et
- le dispositif récepteur (3) comprend un module de déchiffrement (3B), configuré pour déchiffrer au moyen de ladite procédure de chiffrement/déchiffrement d'une version chiffrée du message.

14. Programme d'ordinateur comportant des instructions pour l'exécution des étapes du procédé de surveillance selon la revendication 9 lorsque ledit programme est exécuté par un ordinateur.

15. Support d'enregistrement lisible par un ordinateur sur lequel est enregistré un programme d'ordinateur comprenant des instructions pour l'exécution des étapes du procédé de surveillance selon la revendication 9.

## Patentansprüche

1. Verfahren zur Erkennung von Angriffen auf ein Netzwerk (NW), über das eine sendende Vorrichtung (TX 2) und eine empfangende Vorrichtung (RX 3) kommunizieren, wobei dieses Erkennungsverfahren einen durchsuchbaren Verschlüsselungsalgorithmus, der durch einen Schlüsselerzeugungsalgorithmus definiert wird, ein Verschlüsselungs-/Entschlüsselungsverfahren, einen Trapdoor-Erzeugungsalgorithmus und ein zum Verwenden der Trapdoors geeignetes Testverfahren verwendet, wobei das Erkennungsverfahren umfasst:
- einen Schritt des Erzeugens (E10), mittels des Schlüsselerzeugungsalgorithmus, eines Trapdoor-Ableitungsschlüssels (tk(RG)), der für eine Sicherheitsvorrichtung (RG 6) bestimmt ist, die geeignet ist, eine Mehrzahl von Schlüsselwörtern (KEYW) zu bestimmen, die für Angriffe, die das Netzwerk betreffen könnten, charakteristisch sind;
- einen Schritt des Erzeugens (E40), durch die Sicherheitsvorrichtung, einer Trapdoor (TRAP) für jedes Schlüsselwort der Mehrzahl von Schlüsselwörtern unter Verwendung des durch den Trapdoor-Ableitungsschlüssel parametrierten Trapdoor-Erzeugungsalgorithmus, wobei jede für ein Schlüsselwort erzeugte Trapdoor es ermöglicht, eine Zeichenkette zu erkennen, die für ein Chiffrat dieses Schlüsselworts repräsentativ ist, das mittels des Verschlüsselungs-/Entschlüsselungsverfahrens erhalten wird;
- einen Schritt des Bereitstellens (E50), durch die Sicherheitsvorrichtung, der für die Mehrzahl von Schlüsselwörtern erzeugten Trapdoors (TRAP) für eine Angriffserkennungsvorrichtung (MB 5), die in dem Netzwerk zwischen der sendenden Vorrichtung und der empfangenden Vorrichtung angeordnet ist;
- einen Schritt des Abfangens (E100), durch die Angriffserkennungsvorrichtung (MB 5), einer Mehrzahl von verschlüsselten Zeichenketten (TOK), die von der sendenden Vorrichtung über das Netzwerk an die empfangende Vorrichtung gesendet werden, wobei die Mehrzahl von verschlüsselten Zeichenketten aus der Verschlüsselung einer Mehrzahl von Zeichenketten resultiert, die aus einem Aufteilen einer für die empfangende Vorrichtung bestimmten Nachricht durch die sendende Vorrichtung hervorgegangen sind, wobei die Verschlüsselung mittels des Verschlüsselungs-/Entschlüsselungsverfahrens und eines der empfangenden Vorrichtung zugeordneten öffentlichen Verschlüsselungsschlüssels (pk(RX)) ausgeführt wird;
- einen Schritt des Anwendens (E110), durch die Angriffserkennungsvorrichtung, des Testverfahrens auf die Mehrzahl von abgefangenen verschlüsselten Zeichenketten, wobei das Testverfahren die von der Sicherheitsvorrichtung bereitgestellten Trapdoors verwendet, um zu erkennen, ob es unter der Mehrzahl von abgefangenen verschlüsselten Zeichenketten mindestens eine verschlüsselte Zeichenkette gibt, die für mindestens ein Chiffrat eines Schlüsselworts unter der Mehrzahl von Schlüsselwörtern repräsentativ ist; und
- einen Schritt des Erkennens (E130) eines Angriffs auf das Netzwerk, wenn die Angriffserkennungsvorrichtung das Vorhandensein einer solchen abgefangenen verschlüsselten Zeichenkette erkennt.

2. Verfahren zur Erkennung nach Anspruch 1, wobei der Trapdoor-Ableitungsschlüssel (tk(RG)) von einem privaten Entschlüsselungsschlüssel der empfangenden Vorrichtung (RX 3), der dem öffentlichen Verschlüsselungsschlüssel (pk(RX)) der empfangenden Vorrichtung zugeordnet ist, unabhängig ist.

3. Verfahren zur Erkennung nach Anspruch 2, wobei der Trapdoor-Ableitungsschlüssel von der Sicherheitsvorrichtung erzeugt wird.

4. Verfahren zur Erkennung nach einem der Ansprüche 1 bis 3, umfassend ferner, nach dem Schritt des Anwendens des Testverfahrens, wenn von der Angriffserkennungsvorrichtung kein Angriff erkannt worden ist:
- einen Schritt des Rekonstruierens (E140), durch die Angriffserkennungsvorrichtung, einer verschlüsselten Version der Nachricht ausgehend von der Mehrzahl von abgefangenen verschlüsselten Zeichenketten; und
- einen Schritt des Übertragens (E150), durch die Angriffserkennungsvorrichtung, dieser verschlüsselten Version der Nachricht an die empfangende Vorrichtung.

5. Verfahren zur Erkennung nach einem der Ansprüche 1 bis 4, wobei die Sicherheitsvorrichtung der Angriffserkennungsvorrichtung ferner, bei dem Schritt des Bereitstellens, Erkennungsregeln (RUL) bereitstellt, die bei dem Testschritt anzuwenden sind.

6. Verfahren zur Erkennung nach einem der Ansprüche 1 bis 5, wobei die von der Sicherheitsvorrichtung bestimmten Schlüsselwörter von der Sicherheitsvorrichtung gegenüber der Angriffserkennungsvorrichtung geheim gehalten werden.

7. Verfahren zur Kommunikation zwischen einer sendenden Vorrichtung (TX 2) und einer empfangenden Vorrichtung (RX 3) über ein Netzwerk (NW), wobei dieses Kommunikationsverfahren einen durchsuchbaren Verschlüsselungsalgorithmus, der durch einen Schlüsselerzeugungsalgorithmus definiert wird, ein Verschlüsselungs-/Entschlüsselungsverfahren, einen Trapdoor-Erzeugungsalgorithmus und ein zum Verwenden der Trapdoors geeignetes Testverfahren verwendet, wobei das Kommunikationsverfahren umfasst:
- einen Schritt des Aufteilens (E70) einer für die empfangende Vorrichtung bestimmten Nachricht (M) durch die sendende Vorrichtung in eine Mehrzahl von Zeichenketten;
- einen Schritt des Verschlüsselns (E80) der Mehrzahl von Zeichenketten durch die sendende Vorrichtung mittels des Verschlüsselungs-/Entschlüsselungsverfahrens und eines der empfangenden Vorrichtung zugeordneten öffentlichen Verschlüsselungsschlüssels;
- einen Schritt des Sendens (E90) der Mehrzahl von verschlüsselten Zeichenketten (TOK) durch die sendende Vorrichtung an die empfangende Vorrichtung, wobei die Mehrzahl von verschlüsselten Zeichenketten von der Angriffserkennungsvorrichtung abgefangen wird;
- einen Schritt der Angriffserkennung nach einem Verfahren zur Erkennung von Angriffen nach einem der Ansprüche 1 bis 6 unter Verwendung des durchsuchbaren Verschlüsselungsalgorithmus; und
- einen Schritt des Entschlüsselns (E160) einer verschlüsselten Version der Nachricht mittels des Verschlüsselungs-/Entschlüsselungsverfahrens durch die empfangende Vorrichtung.

8. Verfahren zur Kommunikation nach Anspruch 7, wobei die Größe der aus der Aufteilung der Nachricht resultierenden Zeichenketten in Abhängigkeit von der Größe der von der Sicherheitsvorrichtung bestimmten Schlüsselwörter festgelegt wird.

9. Verfahren zur Überwachung eines Netzwerks durch eine Angriffserkennungsvorrichtung (MB 5) mittels eines durchsuchbaren Verschlüsselungsalgorithmus, der durch einen Schlüsselerzeugungsalgorithmus definiert wird, eines Verschlüsselungs-/Entschlüsselungsverfahrens, eines Trapdoor-Erzeugungsalgorithmus und eines zum Verwenden der Trapdoors geeigneten Testverfahrens, wobei die Angriffserkennungsvorrichtung in dem Netzwerk zwischen einer sendenden Vorrichtung und einer empfangenden Vorrichtung angeordnet ist, wobei das Verfahren zur Überwachung umfasst:
- einen Schritt des Erhaltens (E50), von einer Sicherheitsvorrichtung, die über eine Mehrzahl von Schlüsselwörtern (KEYW) verfügt, die für Angriffe, die auf das Netzwerk begangen werden könnten, charakteristisch sind, einer Mehrzahl von Trapdoors (TRAP), die von der Sicherheitsvorrichtung für die Mehrzahl von Schlüsselwörtern unter Verwendung des Trapdoor-Erzeugungsalgorithmus erzeugt werden, der durch einen Trapdoor-Ableitungsschlüssel parametriert wird, der für die Sicherheitsvorrichtung mittels des Schlüsselerzeugungsalgorithmus erzeugt wird, wobei die Schlüsselwörter von der Sicherheitsvorrichtung gegenüber der Angriffserkennungsvorrichtung geheim gehalten werden;
- einen Schritt des Abfangens (E100) einer Mehrzahl von verschlüsselten Zeichenketten (TOK), die von der sendenden Vorrichtung über das Netzwerk an die empfangende Vorrichtung gesendet werden, wobei die Mehrzahl von verschlüsselten Zeichenketten aus der Verschlüsselung einer Mehrzahl von Zeichenketten resultiert, die aus einem Aufteilen einer für die empfangende Vorrichtung bestimmten Nachricht durch die sendende Vorrichtung hervorgegangen sind, wobei die Verschlüsselung mittels des Verschlüsselungs-/Entschlüsselungsverfahrens und eines der empfangenden Vorrichtung zugeordneten öffentlichen Verschlüsselungsschlüssels ausgeführt wird;
- einen Schritt des Anwendens (E110) des Testverfahrens auf die Mehrzahl von abgefangenen verschlüsselten Zeichenketten, wobei das Testverfahren die von der Sicherheitsvorrichtung bereitgestellten Trapdoors verwendet, um zu erkennen, ob es unter der Mehrzahl von abgefangenen verschlüsselten Zeichenketten mindestens eine verschlüsselte Zeichenkette gibt, die für mindestens ein Chiffrat eines Schlüsselworts unter der Mehrzahl von Schlüsselwörtern repräsentativ ist; und
- einen Schritt des Erkennens (E130) eines Angriffs auf das Netzwerk, wenn die Angriffserkennungsvorrichtung das Vorhandensein einer solchen abgefangenen verschlüsselten Zeichenkette erkennt.

10. Vorrichtung zur Erkennung von Angriffen (MB 5) auf ein Netzwerk (NW), die dazu ausgestaltet ist, einen durchsuchbaren Verschlüsselungsalgorithmus, der durch einen Schlüsselerzeugungsalgorithmus definiert wird, ein Verschlüsselungs-/Entschlüsselungsverfahren, einen Trapdoor-Erzeugungsalgorithmus und ein zum Verwenden der Trapdoors geeignetes Testverfahren zu verwenden, wobei die Angriffserkennungsvorrichtung dazu bestimmt ist, in dem Netzwerk zwischen einer sendenden Vorrichtung und einer empfangenden Vorrichtung angeordnet zu sein, und umfasst:
- ein Modul zum Erhalten (5A), das geeignet ist, von einer Sicherheitsvorrichtung, die über eine Mehrzahl von Schlüsselwörtern (KEYW) verfügt, die für Angriffe, die auf das Netzwerk begangen werden könnten, charakteristisch sind, eine Mehrzahl von Trapdoors (TRAP) zu erhalten, die von der Sicherheitsvorrichtung für die Mehrzahl von Schlüsselwörtern unter Verwendung des Trapdoor-Erzeugungsalgorithmus erzeugt werden, der durch einen Trapdoor-Ableitungsschlüssel parametriert wird, der für die Sicherheitsvorrichtung mittels des Schlüsselerzeugungsalgorithmus erzeugt wird, wobei die Schlüsselwörter der Angriffserkennungsvorrichtung nicht bekannt sind;
- ein Abfangmodul (5B), das dazu ausgestaltet ist, eine Mehrzahl von verschlüsselten Zeichenketten abzufangen, die von der sendenden Vorrichtung über das Netzwerk an die empfangende Vorrichtung gesendet werden, wobei die Mehrzahl von verschlüsselten Zeichenketten aus der Verschlüsselung einer Mehrzahl von Zeichenketten resultiert, die aus einem Aufteilen einer für die empfangende Vorrichtung bestimmten Nachricht durch die sendende Vorrichtung hervorgegangen sind, wobei die Verschlüsselung mittels des Verschlüsselungs-/Entschlüsselungsverfahrens und eines der empfangenden Vorrichtung zugeordneten öffentlichen Verschlüsselungsschlüssels ausgeführt wird;
- ein Testmodul (5C), das dazu ausgestaltet ist, das Testverfahren auf die Mehrzahl von abgefangenen verschlüsselten Zeichenketten anzuwenden, wobei dieses Testverfahren die von der Sicherheitsvorrichtung erhaltenen Trapdoors verwendet, um zu erkennen, ob es unter der Mehrzahl von abgefangenen verschlüsselten Zeichenketten mindestens eine verschlüsselte Zeichenkette gibt, die für mindestens ein Chiffrat eines Schlüsselworts unter der Mehrzahl von Schlüsselwörtern repräsentativ ist; und
- ein Erkennungsmodul (5D) zum Erkennen des Vorliegens eines das Netzwerk betreffenden Angriffs, das aktiviert wird, wenn das Testmodul das Vorliegen einer solchen abgefangenen verschlüsselten Zeichenkette erkennt.

11. Vorrichtung zur Erkennung von Angriffen (5) nach Anspruch 10, umfassend ferner ein Rekonstruktionsmodul (5E) und ein Übertragungsmodul (5F), die von dem Testmodul aktiviert werden, wenn kein Angriff auf das Netzwerk erkannt worden ist, wobei das Rekonstruktionsmodul dazu ausgestaltet ist, ausgehend von der Mehrzahl von abgefangenen verschlüsselten Zeichenketten eine verschlüsselte Version der Nachricht zu rekonstruieren und wobei das Übertragungsmodul dazu ausgestaltet ist, diese verschlüsselte Version der Nachricht an die empfangende Vorrichtung zu übertragen.

12. System (4) zur Erkennung von Angriffen auf ein Netzwerk, über das eine sendende Vorrichtung und eine empfangende Vorrichtung zu kommunizieren in der Lage sind, wobei dieses Erkennungssystem dazu ausgestaltet ist, einen durchsuchbaren Verschlüsselungsalgorithmus, der durch einen Schlüsselerzeugungsalgorithmus definiert wird, ein Verschlüsselungs-/Entschlüsselungsverfahren, einen Trapdoor-Erzeugungsalgorithmus und ein zum Verwenden der Trapdoors geeignetes Testverfahren zu verwenden, wobei das Erkennungssystem umfasst:
- eine Sicherheitsvorrichtung (RG 6), die geeignet ist, eine Mehrzahl von Schlüsselwörtern zu bestimmen, die für Angriffe, die das Netzwerk betreffen könnten, charakteristisch sind;
- eine Angriffserkennungsvorrichtung (MB 5) nach Anspruch 10 oder 11, die in dem Netzwerk zwischen der sendenden Vorrichtung und der empfangenden Vorrichtung angeordnet ist; und
- mindestens ein Schlüsselerzeugungsmodul (6B), das dazu ausgestaltet ist, mittels des Schlüsselerzeugungsalgorithmus einen für die Sicherheitsvorrichtung bestimmten Trapdoor-Ableitungsschlüssel zu erzeugen;
und wobei die Sicherheitsvorrichtung (RG 6) umfasst:
- ein Trapdoor-Erzeugungsmodul (6C), das dazu ausgestaltet ist, für jedes Schlüsselwort der Mehrzahl von Schlüsselwörtern unter Verwendung des durch den Trapdoor-Ableitungsschlüssel parametrierten Trapdoor-Erzeugungsalgorithmus eine Trapdoor zu erzeugen, wobei jede für ein Schlüsselwort erzeugte Trapdoor es ermöglicht, eine Zeichenkette zu erkennen, die für ein Chiffrat dieses Schlüsselworts repräsentativ ist, das mittels des Verschlüsselungs-/Entschlüsselungsverfahrens erhalten wird; und
- ein Bereitstellungsmodul (6D), das dazu ausgestaltet ist, der Angriffserkennungsvorrichtung die für die Schlüsselwörter erzeugten Trapdoors bereitzustellen.

13. Kommunikationssystem (1), das dazu ausgestaltet ist, einen durchsuchbaren Verschlüsselungsalgorithmus, wobei der durchsuchbare Verschlüsselungsalgorithmus durch einen Schlüsselerzeugungsalgorithmus definiert wird, ein Verschlüsselungs-/Entschlüsselungsverfahren, einen Trapdoor-Erzeugungsalgorithmus und ein zum Verwenden der Trapdoors geeignetes Testverfahren zu verwenden, wobei das Kommunikationssystem umfasst:
- eine sendende Vorrichtung (2) und eine empfangende Vorrichtung (3), die geeignet sind, über ein Netzwerk (NW) zu kommunizieren, wobei die empfangende Vorrichtung über ein Schlüsselpaar verfügt, das einen öffentlichen Verschlüsselungsschlüssel und einen privaten Entschlüsselungsschlüssel umfasst, und
- ein System (4) zur Erkennung von Angriffen auf das Netzwerk nach Anspruch 12, das dazu ausgestaltet ist, den durchsuchbaren Verschlüsselungsalgorithmus zu verwenden, wobei das Erkennungssystem eine Sicherheitsvorrichtung (6) und eine Angriffserkennungsvorrichtung (5) nach Anspruch 10 oder 11, die in dem Netzwerk zwischen der sendenden Vorrichtung und der empfangenden Vorrichtung angeordnet ist, umfasst;
wobei:
- die sendende Vorrichtung (2) umfasst:
∘ ein Aufteilungsmodul (2A), das dazu ausgestaltet ist, eine für die empfangende Vorrichtung bestimmte Nachricht in eine Mehrzahl von Zeichenketten aufzuteilen;
∘ ein Verschlüsselungsmodul (2B), das dazu ausgestaltet ist, die Mehrzahl von Zeichenketten mittels des Verschlüsselungs-/Entschlüsselungsverfahrens und des der empfangenden Vorrichtung zugeordneten öffentlichen Verschlüsselungsschlüssels zu verschlüsseln; und
∘ ein Sendemodul (2C), das dazu ausgestaltet ist, die Mehrzahl von verschlüsselten Zeichenketten an die empfangende Vorrichtung zu senden, wobei die Mehrzahl von verschlüsselten Zeichenketten von der Angriffserkennungsvorrichtung abgefangen wird; und
- die empfangende Vorrichtung (3) ein Entschlüsselungsmodul (3B) umfasst, das dazu ausgestaltet ist, eine verschlüsselte Version der Nachricht mittels des Verschlüsselungs-/Entschlüsselungsverfahrens zu entschlüsseln.

14. Computerprogramm, das Anweisungen umfasst, die bei der Ausführung des Programms durch einen Computer die Schritte des Verfahrens zur Überwachung nach Anspruch 9 ausführen.

15. Computerlesbares Speichermedium, auf dem ein Computerprogramm gespeichert ist, das Anweisungen zur Ausführung der Schritte des Verfahrens zur Überwachung nach Anspruch 9 umfasst.

## Claims

1. Method for detecting intrusions on a network (NW) via which a sender device (TX 2) and a receiver device (RX 3) communicate, this detection method using a searchable encryption algorithm defined by a key generation algorithm, an encryption/decryption procedure, a trapdoor generation algorithm, and a test procedure able to use said trapdoors, said detection method comprising:
- a step (E10) of generating, by way of said key generation algorithm, a trapdoor bypass key (tk(RG)) intended for a security device (RG 6) able to determine a plurality of keywords (KEYW) characteristic of intrusions liable to affect the network;
- a step (E40) of generating, by the security device, a trapdoor (TRAP) for each keyword of said plurality of keywords using said trapdoor generation algorithm parameterized by the trapdoor bypass key, each trapdoor generated for a keyword making it possible to detect a character string representative of a cipher of this keyword obtained by way of said encryption/decryption procedure;
- a step (E50) of providing, by the security device, the trapdoors (TRAP) generated for said plurality of keywords to an intrusion detection device (MB 5) located in the network between the sender device and the receiver device;
- a step (E100) of intercepting, by the intrusion detection device (MB 5), a plurality of encrypted character strings (TOK) sent on the network by the sender device to the receiver device, said plurality of encrypted character strings resulting from the encryption of a plurality of character strings resulting from the sender device dividing a message intended for the receiver device, said encryption being performed by way of said encryption/decryption procedure and of a public encryption key (pk(RX)) associated with the receiver device;
- a step (E110) of applying, by the intrusion detection device, the test procedure to the plurality of intercepted encrypted character strings, said test procedure using the trapdoors provided by the security device in order to detect whether there is at least one encrypted character string from among said plurality of intercepted encrypted character strings representative of at least one cipher of a keyword from among said plurality of keywords; and
- a step (E130) of detecting an intrusion on the network if the intrusion detection device detects the existence of such an intercepted encrypted character string.

2. Detection method according to Claim 1, wherein the trapdoor bypass key (tk(RG)) is independent of a private decryption key of the receiver device (RX 3) associated with the public encryption key (pk(RX)) of said receiver device.

3. Detection method according to Claim 2, wherein said trapdoor bypass key is generated by the security device.

4. Detection method according to any one of Claims 1 to 3, furthermore comprising, after the step of applying the test procedure, if no intrusion has been detected by the intrusion detection device:
- a step (E140) of reconstructing, by the intrusion detection device, an encrypted version of the message from the plurality of intercepted encrypted character strings; and
- a step (E150) of transmitting, by the intrusion detection device, this encrypted version of the message to the receiver device.

5. Detection method according to any one of Claims 1 to 4, wherein, in the provision step, the security device furthermore provides the intrusion detection device with detection rules (RUL) to be applied in the test step.

6. Detection method according to any one of Claims 1 to 5, wherein the keywords determined by the security device are kept secret from the intrusion detection device by the security device.

7. Method for communication between a sender device (TX 2) and a receiver device (RX 3) via a network (NW), this communication method using a searchable encryption algorithm defined by a key generation algorithm, an encryption/decryption procedure, a trapdoor generation algorithm, and a test procedure able to use said trapdoors, said communication method comprising:
- a step (E70) of dividing, by the sender device, a message (M) intended for the receiver device into a plurality of character strings;
- a step (E80) of encrypting, by the sender device, the plurality of character strings by way of said encryption/decryption procedure and of a public encryption key associated with the receiver device;
- a step (E90) of sending, by the sender device, said plurality of encrypted character strings (TOK) to the receiver device, said plurality of encrypted character strings being intercepted by the intrusion detection device;
- a step of detecting intrusions in accordance with an intrusion detection method according to any one of Claims 1 to 6 using said searchable encryption algorithm; and
- a step (E160) of decrypting, by the receiver device, an encrypted version of the message by way of said encryption/decryption procedure.

8. Communication method according to Claim 7, wherein the size of the character strings resulting from the message being divided is set depending on the size of the keywords determined by the security device.

9. Method for monitoring a network by an intrusion detection device (MB 5) by way of a searchable encryption algorithm defined by a key generation algorithm, an encryption/decryption procedure, a trapdoor generation algorithm, and a test procedure able to use said trapdoors, said intrusion detection device being located on the network between a sender device and a receiver device, said monitoring method comprising:
- a step (E50) of obtaining, from a security device having a plurality of keywords (KEYW) characteristic of intrusions liable to be committed on the network, a plurality of trapdoors (TRAP) generated by the security device for said plurality of keywords by using said trapdoor generation algorithm parameterized by a trapdoor bypass key generated for the security device by way of said key generation algorithm, said keywords being kept secret from the intrusion detection device by the security device;
- a step (E100) of intercepting a plurality of encrypted character strings (TOK) sent on the network by the sender device to the receiver device, said plurality of encrypted character strings resulting from the encryption of a plurality of character strings resulting from the sender device dividing a message intended for the receiver device, said encryption being performed by way of said encryption/decryption procedure and of a public encryption key associated with the receiver device;
- a step (E110) of applying the test procedure to the plurality of intercepted encrypted character strings, said test procedure using the trapdoors provided by the security device to detect whether there is at least one encrypted character string from among said plurality of intercepted encrypted character strings representative of at least one cipher of a keyword from among said plurality of keywords; and
- a step (E130) of detecting an intrusion on the network if the intrusion detection device detects the existence of such an intercepted encrypted character string.

10. Device (MB 5) for detecting intrusions on a network (NW), configured so as to use a searchable encryption algorithm defined by a key generation algorithm, an encryption/decryption procedure, a trapdoor generation algorithm, and a test procedure able to use said trapdoors, said intrusion detection device being intended to be located on the network between a sender device and a receiver device and comprising:
- an obtaining module (5A), able to obtain, from a security device having a plurality of keywords characteristic of intrusions liable to be committed on the network, a plurality of trapdoors generated by the security device for said plurality of keywords by using said trapdoor generation algorithm parameterized by a trapdoor bypass key generated for the security device by way of said key generation algorithm, said keywords not being known to the intrusion detection device;
- an interception module (5B), configured so as to intercept a plurality of encrypted character strings sent on the network by the sender device to the receiver device, said plurality of encrypted character strings resulting from the encryption of a plurality of character strings resulting from the sender device dividing a message intended for the receiver device, said encryption being performed by way of said encryption/decryption procedure and of a public encryption key associated with the receiver device;
- a test module (5C), configured so as to apply said test procedure to the plurality of intercepted encrypted character strings, this test procedure using the trapdoors obtained from the security device in order to detect whether there is at least one encrypted character string from among said plurality of intercepted encrypted character strings representative of at least one cipher of a keyword from among said plurality of keywords; and
- a module (5D) for detecting the existence of an intrusion affecting the network, activated if the test module detects the existence of such an intercepted encrypted character string.

11. Intrusion detection device (5) according to Claim 10, furthermore comprising a reconstruction module (5E) and a transmission module (5F), which are activated by the test module when no intrusion has been detected on the network, said reconstruction module being configured so as to reconstruct an encrypted version of the message from the plurality of intercepted encrypted character strings, and the transmission module being configured so as to transmit this encrypted version of the message to the receiver device.

12. System (4) for detecting intrusions on a network via which a sender device and a receiver device are able to communicate, this detection system being configured so as to use a searchable encryption algorithm defined by a key generation algorithm, an encryption/decryption procedure, a trapdoor generation algorithm, and a test procedure able to use said trapdoors, the detection system comprising:
- a security device (RG 6), able to determine a plurality of keywords characteristic of intrusions liable to affect the network;
- an intrusion detection device (MB 5) according to Claim 10 or 11 located in the network between the sender device and the receiver device; and
- at least one key generation module (6B) configured so as to generate a trapdoor bypass key intended for the security device by way of the key generation algorithm;
and wherein the security device (RG 6) comprises:
- a trapdoor generation module (6C) configured so as to generate a trapdoor for each keyword of said plurality of keywords by using said trapdoor generation algorithm parameterized by the trapdoor bypass key, each trapdoor generated for a keyword making it possible to detect a character string representative of a cipher of this keyword obtained by way of the encryption/decryption procedure; and
- a provision module (6D), configured so as to provide the trapdoors generated for the keywords to the intrusion detection device.

13. Communication system (1) configured so as to use a searchable encryption algorithm, said searchable encryption algorithm being defined by a key generation algorithm, an encryption/decryption procedure, a trapdoor generation algorithm, and a test procedure able to use said trapdoors, said communication system comprising:
- a sender device (2) and a receiver device (3) that are able to communicate via a network (NW), said receiver device having a key pair comprising a public encryption key and a private decryption key; and
- a system (4) for detecting intrusions on said network according to Claim 12 and configured so as to use said searchable encryption algorithm, said detection system comprising a security device (6) and an intrusion detection device (5) according to Claim 10 or 11 located in the network between the sender device and the receiver device;
wherein:
- the sender device (2) comprises:
∘ a division module (2A), configured so as to divide a message intended for the receiver device into a plurality of character strings;
∘ an encryption module (2B), configured so as to encrypt the plurality of character strings by way of said encryption/decryption procedure and of the public encryption key associated with the receiver device; and
∘ a sending module (2C), configured so as to send said plurality of encrypted character strings to the receiver device, said plurality of encrypted character strings being intercepted by the intrusion detection device; and
- the receiver device (3) comprises a decryption module (3B), configured so as to decrypt an encrypted version of the message by way of said encryption/decryption procedure.

14. Computer program including instructions for executing the steps of the monitoring method according to Claim 9 when said program is executed by a computer.

15. Computer-readable recording medium on which there is recorded a computer program comprising instructions for executing the steps of the monitoring method according to Claim 9.
